# EUROPEAN PATENT APPLICATION

(11) **EP 2 774 728 A2**
(43) Date of publication of application: **10.09.2014**
(21) Application number: 13197064.2
(22) Date of filing: 13.12.2013
(51) Int. Cl.: B25J 9/00

(54) **Robotic system comprising a robot attached to a ceiling and including a plurality of arms**

(30) Priority: 05.03.2013 JP 2013043555
(71) Applicant: Kabushiki Kaisha Yaskawa Denki, Kitakyushu-shi, Fukuoka 806-0004 (JP)
(72) Inventor: Furusawa, Fumiaki, Kitakyushu-shi, Fukuoka 806-0004 (JP); Akitomi, Kenji, Kitakyushu-shi, Fukuoka 806-0004 (JP); Tachibana, Kenichi, Kitakyushu-shi, Fukuoka 806-0004 (JP)
(74) Representative: Viering, Jentschura & Partner Patent- und Rechtsanwälte

(57) **Abstract**

A robotic system (1) includes a robot (10), multiple end effectors, and a controller (90). The robot (10) is attached to a ceiling in a work space and includes multiple arms (11, 12). The multiple end effectors are removably attached to the multiple arms (11, 12), respectively. The controller (90) causes the robot (10) to perform a predetermined operation by replacing at least one end effector attached to at least one of the multiple arms in accordance with a type of a workpiece and causing the multiple arms to which the end effectors are attached to perform an operation in accordance with the type of the workpiece in cooperation with each other.

## Description

### BACKGROUND OF THE INVENTION

### 1. Field of the Invention

The embodiments disclosed herein relate to a robotic system.

### 2. Description of the Related Art

To date, a robotic system including a so-called ceiling-hung robot, which is attached to the ceiling of a work space, has been developed. The robotic system causes the robot to perform a predetermined operation (see, for example, Japanese Patent Application Publication No. 2012-125890). With the technology described in Japanese Patent Application publication No. 2012-125890, the robot lifts a workpiece with an end effector (for example, a hand) attached to one arm and moves the workpiece to a target position.

The operation performed by the robot in the robotic system described in Japanese Unexamined Patent Application Publication No. 2012-125890 is a simple operation that can be completed with a single arm and thus an end effector suitable for the operation is attached to the arm. However, in the case, for example, where multiple types of operations are to be performed in accordance with multiple types of workpieces, the above-described robotic system may be incapable of performing such operations.

### SUMMARY OF THE INVENTION

An aspect of an embodiment is made in view of the above-described circumstances. An object of the disclosure is to provide a robotic system that can cause a robot to perform multiple types of operations in accordance with multiple types of workpieces.

A robotic system according to an aspect of an embodiment includes a robot, end effectors, and a controller. The robot is attached to a ceiling in a work space and includes multiple arms. The multiple end effectors are removably attached to the multiple arms, respectively. The controller replaces at least one end effector attached to at least one of the multiple arms in accordance with a type of a workpiece and causes the multiple arms to which the end effectors are attached to perform an operation in accordance with the type of the workpiece in cooperation with each other so as to cause the robot to perform a predetermined operation.

An aspect of the embodiments can provide a robotic system that can cause a robot to perform multiple types of operations in accordance with multiple types of workpieces.

### BRIEF DESCRIPTION OF THE DRAWINGS

Fig. 1 is a schematic perspective view of a robotic system according to an embodiment.
Fig. 2 is a schematic side view of the robotic system illustrated in Fig. 1.
Fig. 3 is a schematic front view of the robotic system illustrated in Fig. 2.
Fig. 4 is a schematic cross sectional view of the robotic system taken along the line IV-IV of Fig. 2.
Fig. 5 simply and schematically illustrates a configuration of a robot included in the robotic system illustrated in Fig. 1.
Fig. 6 is a schematic perspective view of a print workbench illustrated in Fig. 1.
Fig. 7 is a schematic perspective view of the squeegee rack illustrated in Fig. 2 and other drawings.
Fig. 8 is a schematic cross sectional view of a container illustrated in Fig. 1.
Fig. 9 is a schematic side view of a vacuum stand illustrated in Fig. 4 and other drawings.
Fig. 10 is a schematic side view of a screen-printing-plate gripping hand attached to a right arm.
Fig. 11 is a schematic left side view of the screen-printing-plate gripping hand illustrated in Fig. 10.
Fig. 12 is a schematic side view of the screen-printing-plate gripping hands in the state of gripping a screen-printing plate.
Fig. 13 is a schematic side view of a container gripping hands.
Fig. 14 is a schematic left side view of the container gripping hand attached to the right arm illustrated in Fig. 13.
Fig. 15 is a schematic bottom view of the container gripping hand attached to the left arm illustrated in Fig. 13.
Fig. 16 is a schematic side view of the container gripping hands in the state of gripping a container while the container is turned upside down.
Fig. 17 is a schematic side view of the container gripping hand in the state of gripping a lid portion of the container.
Fig. 18 is a schematic left side view of the container gripping hand illustrated in Fig. 17.
Fig. 19 is a schematic side view of a squeegee gripping hand.
Fig. 20 is a schematic left side view of the squeegee gripping hand illustrated in Fig. 19.
Fig. 21 is a schematic left side view of the squeegee gripping hand in the state of gripping a vacuum.
Fig. 22 is a schematic side view of a robot hand stand illustrated in Fig. 1.
Fig. 23 is a schematic left side view of the robot hand stand illustrated in Fig. 22.
Fig. 24 is a schematic side view of a dye-container scale stand illustrated in Fig. 1.
Fig. 25 is a flow chart illustrating a procedure of operations performed by a robotic system according to an embodiment.

### DESCRIPTION OF THE EMBODIMENTS

Referring now to the attached drawings, embodiments of a robotic system disclosed herein will be described in detail below. The embodiments described below do not limit the invention.

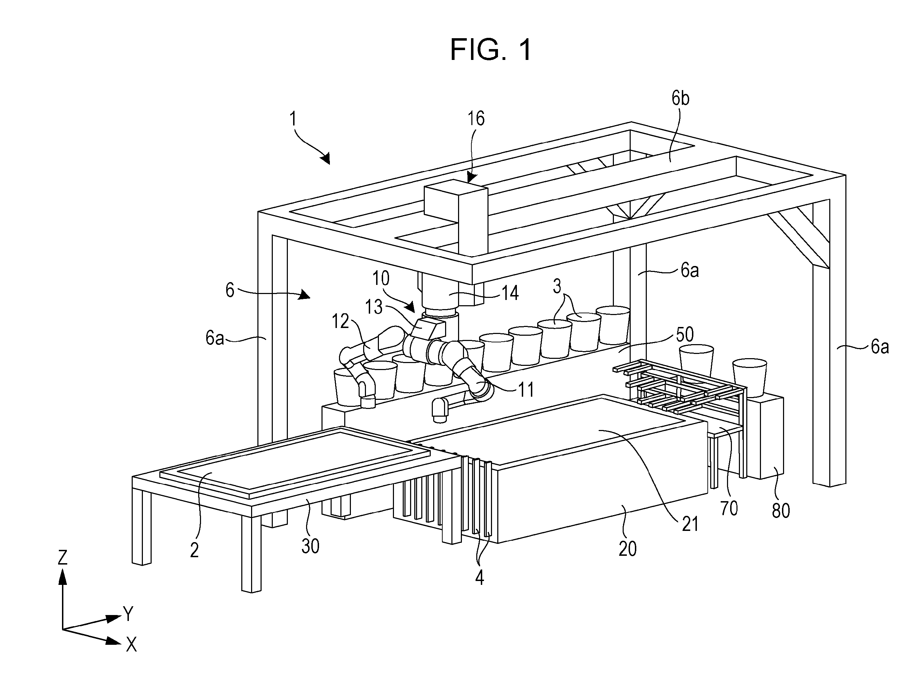

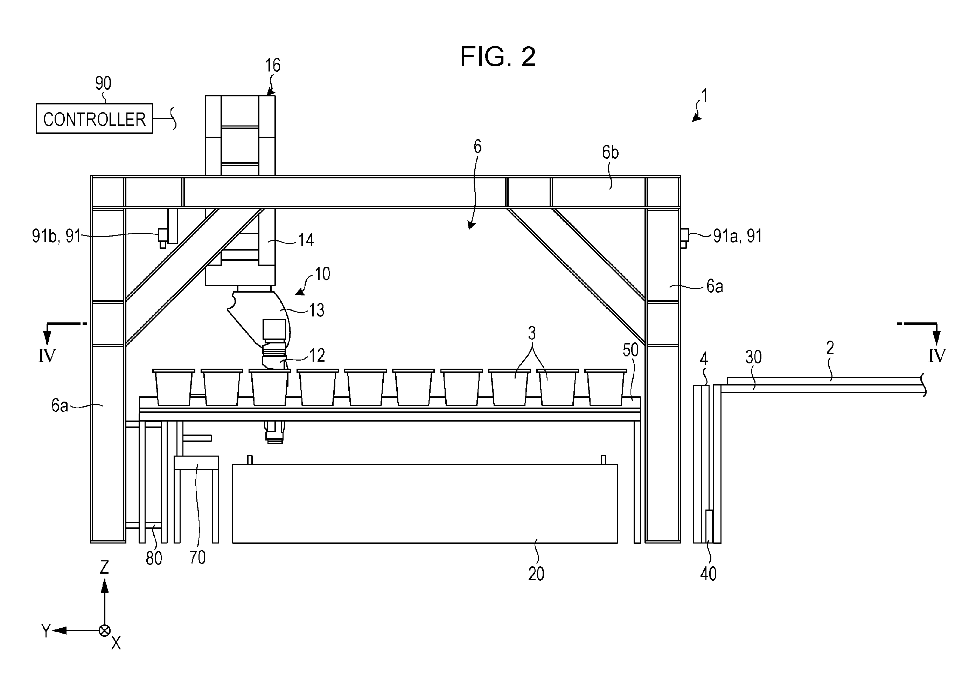

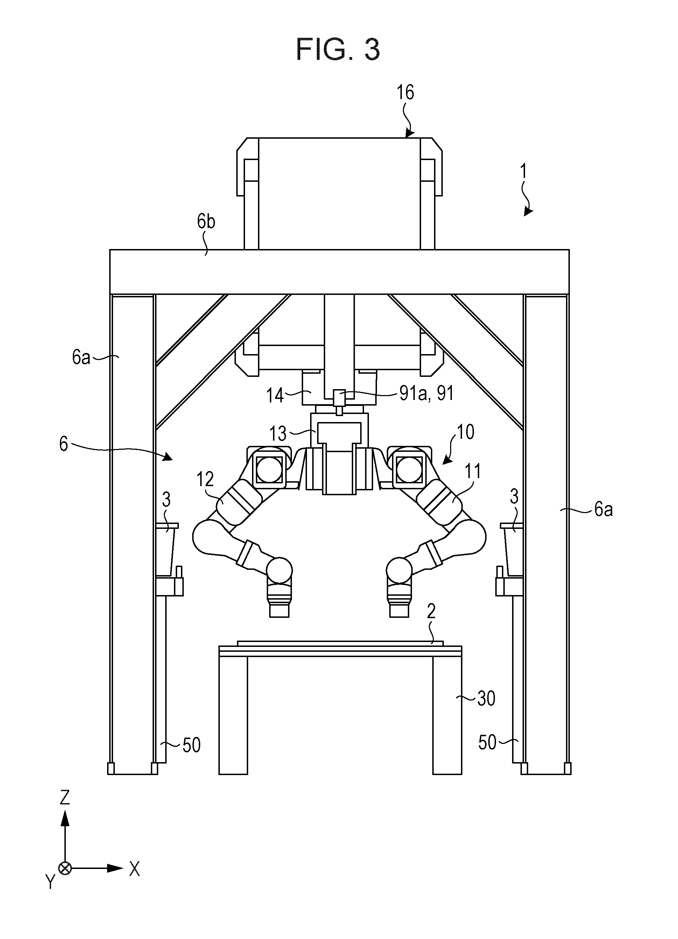

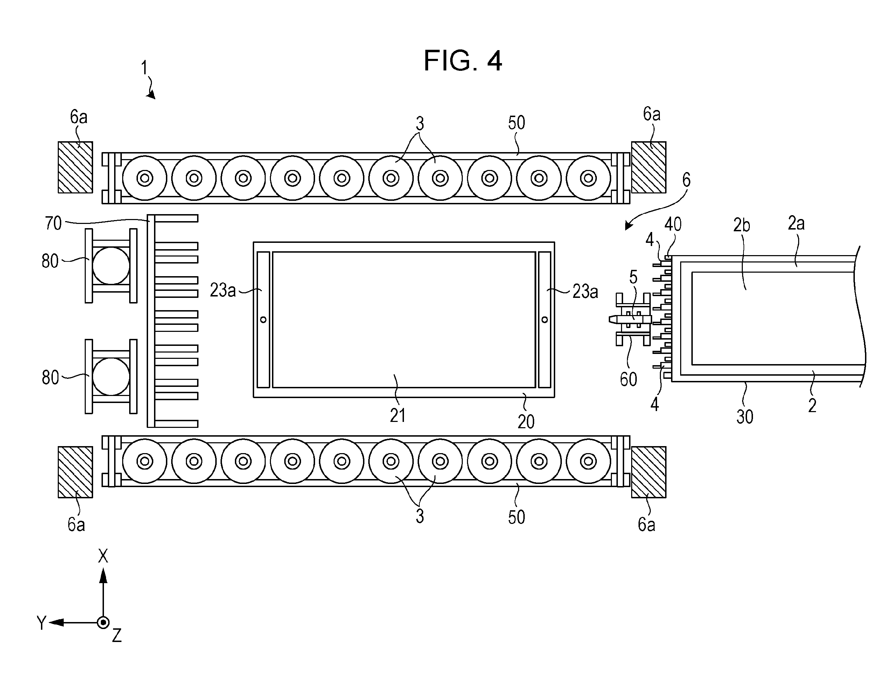

Fig. 1 is a schematic perspective view of a robotic system according to an embodiment. Fig. 2 is a schematic side view of the robotic system illustrated in Fig. 1, Fig. 3 is a schematic front view of the robotic system illustrated in Fig. 2, and Fig. 4 is a schematic cross sectional view of the robotic system taken along the line IV-IV of Fig. 2.

For ease of illustration, Figs. 1 to 4 illustrate a three-dimensional orthogonal coordinate system including a Z axis extending vertically in upward and downward directions, taken as positive and negative directions, an X axis extending in left and right directions of a robot, which will be described below, and a Y axis extending in front and rear directions of the robot. Such an orthogonal coordinate system is also used in some of other drawings for the following description.

As illustrated in Figs. 1 to 4, a robotic system 1 according to an embodiment includes a robot 10, a print workbench 20, a screen set stand 30, a squeegee rack 40, dye-container stands 50, a vacuum stand 60 (illustrated only in Fig. 4), a robot hand stand 70, dye-container scale stands 80, and a controller 90 (illustrated only in Fig. 2).

The robotic system 1 performs predetermined operations, such as a printing operation, using the robot 10. More specifically, in the robotic system 1, the robot 10 transports a screen-printing plate 2 placed on the screen set stand 30 and places the screen-printing plate 2 on the print workbench 20. Then, the robot 10 transports a container 3 containing a dye from the dye-container stand 50 to a position above the screen-printing plate 2 and pours the dye over the screen-printing plate 2. The robot 10 removes a surplus dye adhering to the container 3 by sucking the dye with a vacuum 5 held on the vacuum stand 60 illustrated in Fig. 4 and returns the container 3 to the dye-container stand 50. Subsequently, the robot 10 performs a squeezing operation by picking up a squeegee 4 from the squeegee rack 40 and sliding the squeegee 4 over the screen-printing plate 2 so as to print a design or a pattern on a subject (for example, cloth) 21 placed on the print workbench 20. The robot 10 then picks up the vacuum 5 from the vacuum stand 60 and transports the vacuum 5 to a position above the screen-printing plate 2 to remove a surplus dye remaining over the screen-printing plate 2 by sucking the surplus dye with the vacuum 5. Subsequently, the robot 10 returns the screen-printing plate 2 placed on the print workbench 20 to the screen set stand 30.

As is clear from this description, the robotic system 1 is a system for automating steps of the printing operation including a pickup of the screen-printing plate 2, printing of the subject 21 using the screen-printing plate 2, and a return of the screen-printing plate 2 to an original position.

In the above-described printing operation, the robot 10 handles multiple types of workpieces, such as, the screen-printing plate 2, a container 3, and a squeegee 4. Moreover, the robot 10 performs multiple types of operations in accordance with the multiple types of workpieces, such as, transporting the screen-printing plate 2, transporting the container 3, pouring a dye, and performing a squeegeeing operation using the squeegee 4.

Here, if the robot has one arm and the type of an end effector attachable to the arm is limited to one type, the robot may be incapable of performing the above-described operations.

In view of this circumstance, the robotic system 1 according to the embodiment includes a robot 10 including multiple arms and end effectors removably attached to the multiple arms, respectively. The robotic system 1 causes the robot 10 to perform a predetermined operation, that is, a printing operation, by replacing at least one end effector of at least one of the multiple arms in accordance with a type of a workpiece and causing the multiple arms to which the end effectors are attached to perform an operation in accordance with the type of the workpiece in cooperation with each other.

Thus, even in the case where the robot 10 has to perform multiple operations in accordance with multiple types of workpieces, the robot 10 can perform such operations.

In some cases, some of the steps of the above-described printing operation are manually performed. In these cases, the quality of the printed subjects 21 varies depending on the technique or the experience of the workers.

In the robotic system 1 according to the embodiment, steps of the printing operation are performed by the robot 10, whereby the quality of the printed subjects 21 varies to a lesser extent.

Now, components included in the robotic system 1 will be described below. The robot 10 is arranged in a work space 6 in which a printing operation is performed. Specifically, the work space 6 is a space defined by multiple (for example, four) pillars 6a and a ceiling 6b supported by the pillars 6a. The robot 10 is attached to the ceiling 6b of the work space 6. In Fig. 1, the pillar 6a on the near side is omitted for ease of illustration.

The robot 10 includes multiple (for example, two) arms 11 and 12. Specifically, the robot 10 is a so-called ceiling-hung dual-arm robot having a left arm 11 and a right arm 12 respectively attached to left and right shoulders of a trunk portion 13. Although the robot 10 includes two arms in this example, the number of arms is not limited to two and the robot 10 may include three arms or more.

The robot 10 is an articulated robot in which each of the left arm 11 and the right arm 12 includes multiple articulate axes and actuators (not illustrated) corresponding to the articulate axes. The trunk portion 13 of the robot 10 is connected to a base portion 14 with an actuator, not illustrated, interposer therebetween and is rotatable around a rotation axis of the actuator.

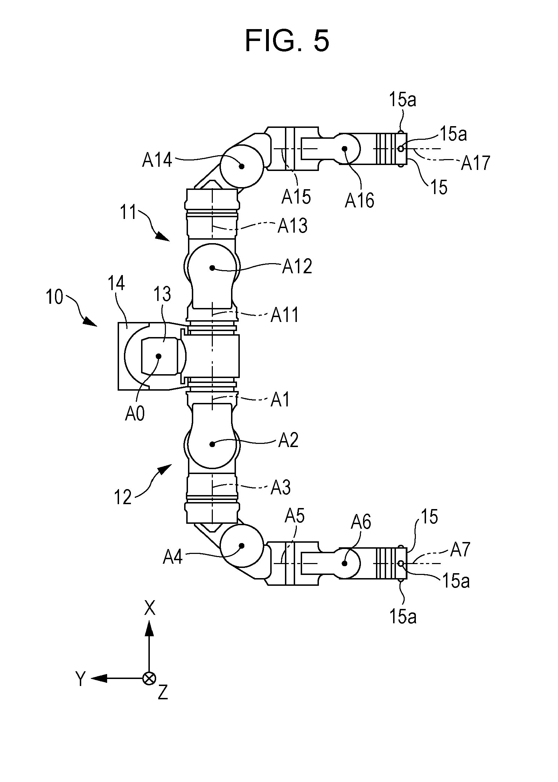

Referring to Fig. 5, the rotation axis of each actuator is described in detail. Fig. 5 simply and schematically illustrates a configuration of the robot 10 included in the robotic system 1. In Fig. 5, an illustration of an end effector is omitted.

As illustrated in Fig. 5, the base portion 14 and the trunk portion 13 are connected so as to be rotatable relative to each other around a rotation axis A0. The rotation axis A0 extends in a direction substantially perpendicular to the ceiling 6b to which the base portion 14 is attached.

The trunk portion 13 and the left arm 11 are connected so as to be rotatable around a rotation axis A11, while the trunk portion 13 and the right arm 12 are connected so as to be rotatable around a rotation axis A1. The rotation axis A1 and the rotation axis A11 extend in directions perpendicular to the rotation axis A0.

As described above, each of the left arm 11 and the right arm 12 is an articulated robot including multiple articulate axes and includes seven rotation axes (articulate axes), including the rotation axis A1 or A11, and articulations rotatable around the rotation axes.

Specifically, a rotation axis A12 of the left arm 11 is perpendicular to the rotation axis A11, a rotation axis A13 of the left arm 11 is perpendicular to the rotation axis A12, a rotation axis A14 of the left arm 11 is perpendicular to the rotation axis A13, a rotation axis A15 of the left arm 11 is perpendicular to the rotation axis A14, a rotation axis A16 of the left arm 11 is perpendicular to the rotation axis A15, and a rotation axis A17 of the left arm 11 is perpendicular to the rotation axis A16. A rotation axis A2 of the right arm 12 is perpendicular to the rotation axis A1, a rotation axis A3 of the right arm 12 is perpendicular to the rotation axis A2, a rotation axis A4 of the right arm 12 is perpendicular to the rotation axis A3, a rotation axis A5 of the right arm 12 is perpendicular to the rotation axis A4, a rotation axis A6 of the right arm 12 is perpendicular to the rotation axis A5, and a rotation axis A7 of the right arm 12 is perpendicular to the rotation axis A6.

Here, the word "perpendicular" and the words such as "horizontal" and "parallel" used in the following description are not necessarily meant to be precise in the mathematical sense and comprehend practical tolerances or errors.

Each of the left arm 11 and the right arm 12 has an arm-side attachment portion 15 at its distal end to which various types of end effectors are attachable. Although a detailed illustration is omitted, the arm-side attachment portion 15 has multiple retractable convex portions 15a having a substantially hemispheric shape. Specifically, the convex portions 15a protrude when, for example, supplied with air from an air supply source, not illustrated, whereas the convex portions 15a draw in when air is not supplied thereto. As described below, each end-effector-side attachment portion, on the other hand, has concave portions in which the convex portions 15a can be fitted.

Thus, an end effector is attached to and fixed to the arm 11 or 12 when, for example, the convex portions 15a of the arm-side attachment portion 15 protrude when supplied with air and the convex portions 15a are fitted in the concave portions of the end-effector-side attachment portion. On the other hand, when air supply is stopped, the convex portions 15a draw in and the convex portions 15a and the concave portions become no longer fitted together. The end effector is thus detached from the arm 11 or 12.
Replacement of end effectors is facilitated by the above-described configurations of the arms 11 and 12 and end effectors.

The robot 10 then replaces end effectors in accordance with the types of workpieces in the above-described manner and causes the left arm 11, the right arm 12, and end effectors to work in cooperation with one another so as to perform a printing operation in the work space 6. The configuration of end effectors and the details of the printing operation performed by the robot 10 will be described below.

Referring back to Figs. 1 to 4, the robotic system 1 includes a sliding mechanism 16 that slides the robot 10 along the ceiling 6b. Although not illustrated, the sliding mechanism 16 includes a groove extending in the Y-axis direction in the ceiling 6b, a rack gear extending in the Y-axis direction in the groove, a motor embedded in the base portion 14 of the robot 10, and a pinion gear mounted on the output shaft of the motor and meshing with the rack gear.

When the pinion gear is driven by the motor to rotate, the robot 10 is caused to slide (move horizontally) along the ceiling 6b in the Y-axis direction, in which the rack gear extends. In other words, the robot 10 is linearly moved in the Y-axis direction.

As described above, the robot 10 can expand its operable range by having the sliding mechanism 16. Thus, even in the case, for example, where the work space 6 for the printing operation is large in the Y-axis direction, the robot 10 can reliably and easily perform the printing operation. Here, a configuration in which rack and pinion gears are used is described as an example of the sliding mechanism 16, but the sliding mechanism 16 is not limited to this. The sliding mechanism 16 may be a mechanism in which the robot 10 slides using, for example, a pulley and a belt instead of rack and pinion gears.

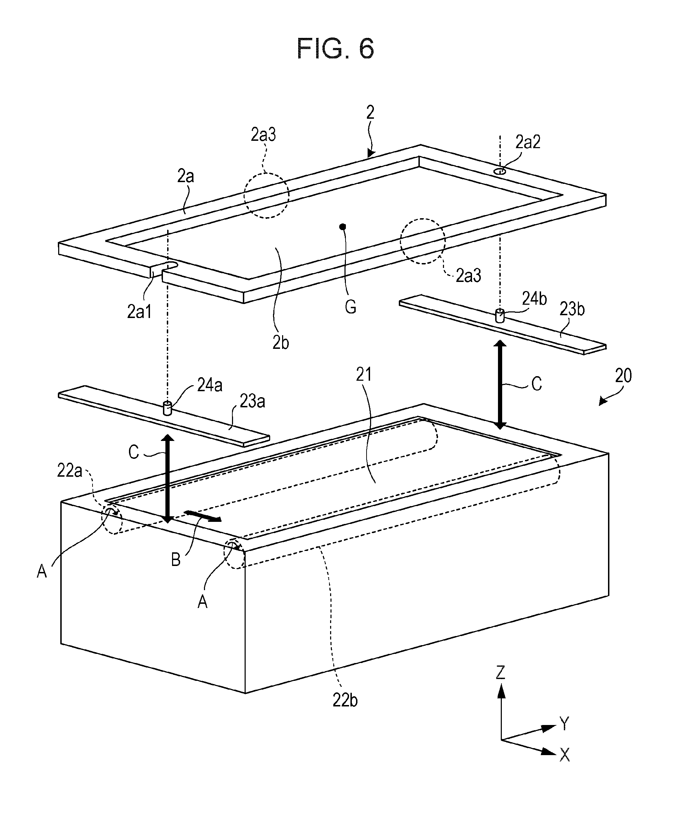

The print workbench 20 is a stand on which the screen-printing plate 2 is placed and a printing operation is performed on a subject 21. Fig. 6 is a schematic perspective view of the print workbench 20. When viewed in a plan, the print workbench 20 is substantially rectangular. The print workbench 20 includes multiple (for example, two) rollers 22a and 22b disposed parallel to the long sides of the rectangular and apart from each other. A subject 21 that has not been printed is wound around the roller 22a of the two rollers 22a and 22b, while one end of the subject 21 wound around the roller 22a is wound around and fixed to the roller 22b.

The subject 21 described above is, for example, cloth. Here, cloth is used as an example of the subject 21 but the subject 21 is not limited to cloth. The subject 21 may be any printable subject such as woven fabrics, nonwoven fabrics, paper, or films.

The rollers 22a and 22b are connected to and driven to rotate by, for example, a motor (not illustrated). Thus, after a design or the like has been printed on a portion of the subject 21 between the rollers 22a and 22b during a squeegeeing operation described below, the rollers 22a and 22b are rotated in the direction of arrow A. As the rollers 22a and 22b are rotated, the subject 21 slides in the direction of arrow B and a portion of the subject 21 that has not been printed is exposed between the rollers 22a and 22b. The squeegeeing operation is performed again in this state and the design or the like is printed. By repeatedly performing this operation, printing on the subject 21 can be performed successively and efficiently.

The print workbench 20 also includes multiple (for example, two) raising-and-lowering units 23a and 23b, on which the screen-printing plate 2 is placed and which raise and lower the screen-printing plate 2 placed on them. The raising-and-lowering units 23a and 23b are arranged parallel to the short sides of the print workbench 20. The raising-and-lowering units 23a and 23b have a substantially flat shape. The arrangement and the shape of the raising-and-lowering units 23a and 23b are not particularly limited to those specified as above and the raising-and-lowering units 23a and 23b may have other arrangements or shapes as long as they can support and raise or lower the screen-printing plate 2.

The raising-and-lowering units 23a and 23b are connected to, for example, a motor (not illustrated) and are driven by the motor so as to be capable of raising and lowering the screen-printing plate 2 in the direction of arrow C. The raising-and-lowering units 23a and 23b are in raising positions while, for example, the screen-printing plate 2 is being transported thereto and placed thereon. The raising-and-lowering units 23a and 23b are in lowering positions while the subject 21 is being printed using the screen-printing plate 2.

The raising-and-lowering units 23a and 23b respectively include protrusions 24a and 24b for positioning the screen-printing plate 2. Specifically, a substantially cylindrical protrusion 24a is formed at or around the middle portion of the raising-and-lowering unit 23a, while a substantially cylindrical protrusion 24b is similarly formed at or around the middle portion of the raising-and-lowering unit 23b. The protrusions 24a and 24b are formed at such positions that, for example, the line connecting the protrusions 24a and 24b together is substantially parallel to the Y-axis direction.

The protrusions 24a and 24b may have any arrangements or shapes as long as they are usable for positioning the screen-printing plate 2. For example, the protrusions 24a and 24b may be rectangular pillars having angular corners.

Referring now to Fig. 6, the screen-printing plate 2 is described. The screen-printing plate 2 includes an outer frame 2a and a screen 2b. The outer frame 2a is made of a material such as aluminum and has a substantially rectangular shape when viewed in a plan. The long sides of the outer frame 2a are held by hook portions of end effectors for holding the screen-printing plate 2, which will be described below. Thus, the width of the outer frame 2a in the X-axis direction or the thickness of the outer frame 2a in the Z-axis direction are set such that the outer frame 2a can be held by the hook portions.

The screen 2b is made of fibers such as polyester and has a mesh having a design or a pattern. The screen 2b is fixed to the inner side of the outer frame 2a while being stretched. The materials or the shapes of the outer frame 2a and the screen 2b are only exemplary and are not meant to be limiting.

The screen-printing plate 2 has a long hole (reference portion) 2a1, into which the protrusion 24a can be inserted, at or around the middle of one short side of the outer frame 2a of the screen-printing plate 2, specifically, the position corresponding to the position of the above-described protrusion 24a of the raising-and-lowering unit 23a. The long hole 2a1 is formed by cutting away part of the outer frame 2a. The screen-printing plate 2 also has a through hole (reference portion) 2a2, into which the protrusion 24b can be inserted, at or around the middle of the other short side of the outer frame 2a that is opposite to the short side in which the long hole 2a1 is formed, specifically, the position corresponding to the position of the above-described protrusion 24a of the raising-and-lowering unit 23a.

By inserting the protrusion 24a into the long hole 2a1 of the screen-printing plate 2 and the protrusion 24b into the through hole 2a2 of the screen-printing plate 2, the screen-printing plate 2 can be placed on the raising-and-lowering units 23a and 23b while being accurately positioned with respect to the raising-and-lowering units 23a and 23b during the operations of transporting the screen-printing plate 2 and placing the screen-printing plate 2 on the raising-and-lowering units 23a and 23b. Furthermore, by lowering the raising-and-lowering units 23a and 23b on which the screen-printing plate 2 is placed, the position of the screen 2b of the screen-printing plate 2 can be easily matched with the position of the subject 21 on the print workbench 20. Consequently, the printing operation can be performed while the design or the like of the screen 2b is arranged at a desired position of the subject 21 and thus the quality of the printed subject 21 can be improved.

Referring back to Figs. 1 to 4, the screen set stand 30 is a stand on which the screen-printing plate 2 is placed before being transported to the print workbench 20. Specifically, before the printing operation is performed, the screen-printing plate 2 is placed on the screen set stand 30 by an operator, not illustrated, for preparation of the printing operation.

The squeegee rack 40 is a rack on which the squeegees 4 stand and is disposed between the screen set stand 30 and the print workbench 20. Fig. 1 only illustrates the squeegees 4 for ease of illustration.

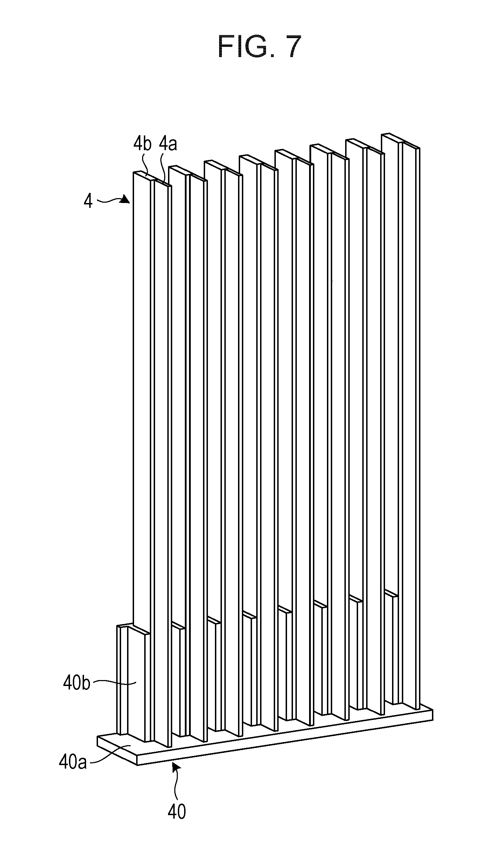

Fig. 7 is a schematic perspective view of the squeegee rack 40. The squeegee rack 40 is formed so as to allow multiple squeegees 4 to stand thereon. Specifically, the squeegee rack 40 includes a bottom board 40a and multiple partitioning plates 40b that protrude upward in the vertical direction from the bottom board 40a. The squeegee rack 40 allows multiples squeegees 4 to stand thereon by causing each squeegee 4 to be disposed between adjacent partitioning plates 40b.

Referring now to Fig. 7, the squeegees 4 will be described. Each squeegee 4 includes a squeegee body 4a and a squeegee gripper 4b attached to the squeegee body 4a. The squeegee body 4a is made of an elastic body (for example, rubber) and has a substantially rectangular parallelepiped (plate) shape. The squeegee gripper 4b is made of a material such as aluminum. The squeegee gripper 4b has such a shape that the squeegee gripper 4b can be gripped by a hook portion of an end effector for squeegees 4, which will be described below, such as a substantially rectangular parallelepiped (plate) shape as in the case of the squeegee body 4a.

The squeegeeing operation is performed by sliding the squeegee 4 having the above-described configuration over the screen-printing plate 2. Specifically, firstly, the squeegee 4 is arranged such that the longitudinal direction of the squeegee 4 is parallel to the short sides of the screen 2b. Then, the squeegee body 4a is pressed against the screen 2b of the screen-printing plate 2 and moved so as to slide over the screen 2b in the Y-axis direction.

Thus, the length of the squeegee 4 in the longitudinal direction, more specifically, the length of the squeegee body 4a of the squeegee 4 in the longitudinal direction is set so as to be shorter than, for example, the length of the short sides of the screen 2b. The number of squeegees 4 prepared corresponds to, for example, the number of colors of dyes used for the printing operation so as not to mix colors in the squeegeeing operation. The materials, the shapes, and the numbers of the squeegee rack 40 and the squeegees 4 are only exemplary and not meant to be limiting.

Referring back to Figs. 1 to 4, the dye-container stands 50 are stands on which containers 3 containing printing dyes are placed. As well illustrated in Fig. 4, the dye-container stands 50 are arranged in the work space 6 so as to sandwich the print workbench 20 from both sides.
In Fig. 1, the illustration of the dye-container stand 50 on the near side is omitted for ease of illustration.

Each dye-container stand 50 has a substantially rectangular parallelepiped shape and is arranged such that the longitudinal direction of the dye-container stand 50 is substantially parallel to the Y-axis direction. Multiple (for example, ten) containers 3 are arranged in line on each dye-container stand 50 having the above-described configuration. The shape and the arrangement of the dye-container stands 50 and the number of containers 3 placed on each dye-container stand 50 are only exemplary and not meant to be limiting.

As described above, each container 3 contains a printing dye (for example, printing paste). Different containers 3 contain different colored dyes. In other words, separate containers are prepared for different colors of dyes.

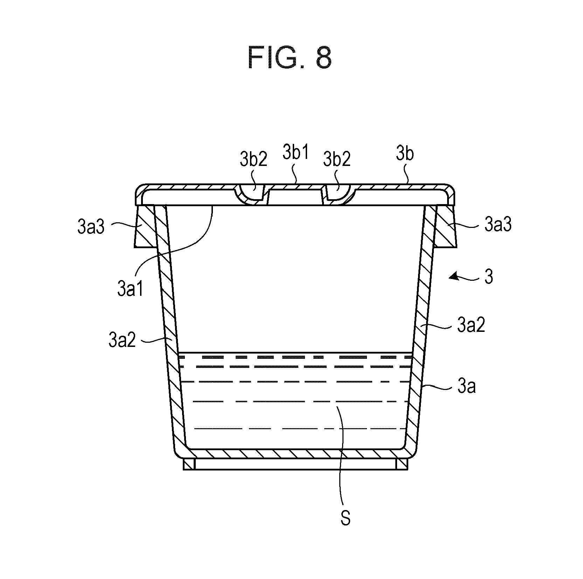

Fig. 8 is a schematic cross sectional view of a container 3. The container 3 is made of a material such as plastics and includes a container body 3a and a lid portion 3b. When viewed in a cross section, the container body 3a has a concave shape and the diameter of the container body 3a increases toward an upper side. The container body 3a contains a dye S. An opening 3a1 is formed on the upper side of the container body 3a in Fig. 8. The above-described lid portion 3b is removably attached over the opening 3a1. A container-body gripper 3a3 is formed at an upper portion on the outer circumferential surface 3a2 of the container body 3a so as to protrude sideways. The container-body gripper 3a3 is gripped by a hook portion of an end effector for containers 3, which will be described below.

The lid portion 3b has a substantially disc shape when viewed in a plan (see Fig. 4). A lid knob 3b1, which is substantially circular when viewed in a plan, is formed at or around the center of the lid portion 3b so as to protrude upward. The lid knob 3b1 is gripped by a lid hook portion of an end effector for containers 3, which will be described below. A hollow 3b2, into which the lid hook portion can be inserted, is formed around the circumference of the lid knob 3b1. The material or the shape of the container 3 is not limited to those described above. The container 3 may be made of any material and have any shape as long as the container 3 can be gripped by an end effector for containers 3. For example, the container may be made of metal and have a rectangular column shape.

The vacuum stand 60 is a stand on which a vacuum (sucking unit) 5 that can suck dyes is placed. As illustrated in Fig. 4, the vacuum stand 60 is arranged in the work space 6, specifically, between the print workbench 20 and the screen set stand 30. The illustration of the vacuum stand 60 is omitted in Fig. 1 for ease of illustration.

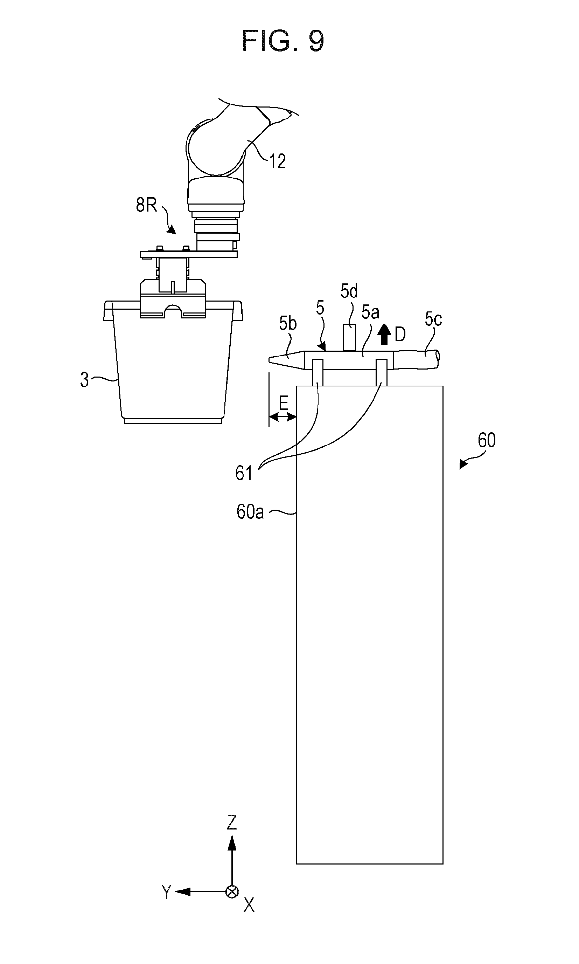

Fig. 9 is a schematic side view of the vacuum stand 60. The vacuum stand 60 has a substantially rectangular parallelepiped shape and vacuum attachment portions 61, to which the vacuum 5 is removably attached, are attached to the upper surface of the vacuum stand 60. Although not illustrated in detail, the vacuum attachment portions 61 are, for example, multiple pins that can tightly hold portions near the front end of the vacuum 5 (a left portion of the vacuum 5 in Fig. 9) and the rear end of the vacuum 5 (a right portion of the vacuum 5 in Fig. 9) to fix the vacuum 5.

Referring now to Fig. 9, the vacuum 5 is described. The vacuum 5 includes a vacuum body 5a, a suction port 5b, and a hose 5c. The vacuum body 5a has a substantially cylindrical shape. The suction port 5b is connected to the front end of the vacuum body 5a. One end of the hose 5c is connected to the rear end of the vacuum body 5a while another end of the hose 5c is connected to a sucking device (not illustrated) that includes an intake fan and the like.

In the operation (to be described below) of removing a surplus dye adhering to, for example, the outer circumferential surface of the container 3 by sucking the surplus dye, while the outer circumferential surface of the container 3 is brought close to the suction port 5b, the intake fan of the sucking device is driven to rotate and thus the surplus dye is sucked through the suction port 5b. The surplus dye thus sucked flows into the sucking device via the vacuum body 5a and the hose 5c. The sucking device includes a tank, which is not illustrated, and the surplus dye thus sucked is stored in the tank.

When the vacuum 5 is placed on the vacuum stand 60, the vacuum 5 is attached to the vacuum attachment portions 61 such that a front end portion of the suction port 5b protrudes from a side surface 60a of the vacuum stand 60 by a predetermined distance E. Thus, the container 3 can be easily brought close to the suction port 5b of the vacuum 5 during the removing operation of sucking the surplus dye and the surplus dye adhering to the outer circumferential surface of the container 3 can thus be reliably sucked.

The vacuum 5 also includes a vacuum handle (holdable portion) 5d that can be held by a hook portion of an end effector for squeegees 4, which will be described below. Specifically, the vacuum handle 5d has a substantially rectangular shape when viewed from the side and protrudes upward from the vacuum body 5a in Fig. 9. With this configuration, when, for example, the vacuum handle 5d of the vacuum 5 is gripped by a hook portion of an end effector and lifted in the direction of arrow D, the vacuum 5 can be easily detached from the vacuum attachment portions 61.

Although the vacuum 5 and the vacuum stand 60 are described as above, the above description is only exemplary and not meant to be limiting. Specifically, the vacuum 5 may have any configuration as long as the vacuum 5 can suck a surplus dye. The vacuum stand 60 may have any configuration as long as the vacuum 5 can be removably placed on the vacuum stand 60.

Before describing the robot hand stand 70, description is given on end effectors, which are replaced so as to correspond to the types of workpieces, such as the screen-printing plate 2, the containers 3, and the squeegees 4. Since all the end effectors according to the embodiment are hands, the end effectors are also referred to as "hands" below.

The robotic system 1 includes multiple (for example, three) types of hands that are removably attached to left and right arms 11 and 12. Specifically, the robotic system 1 includes screen-printing-plate gripping hands 7 that hold the screen-printing plate 2, container gripping hands 8L and 8R that mainly hold the containers 3, and squeegee gripping hands 9 that mainly hold the squeegees 9.

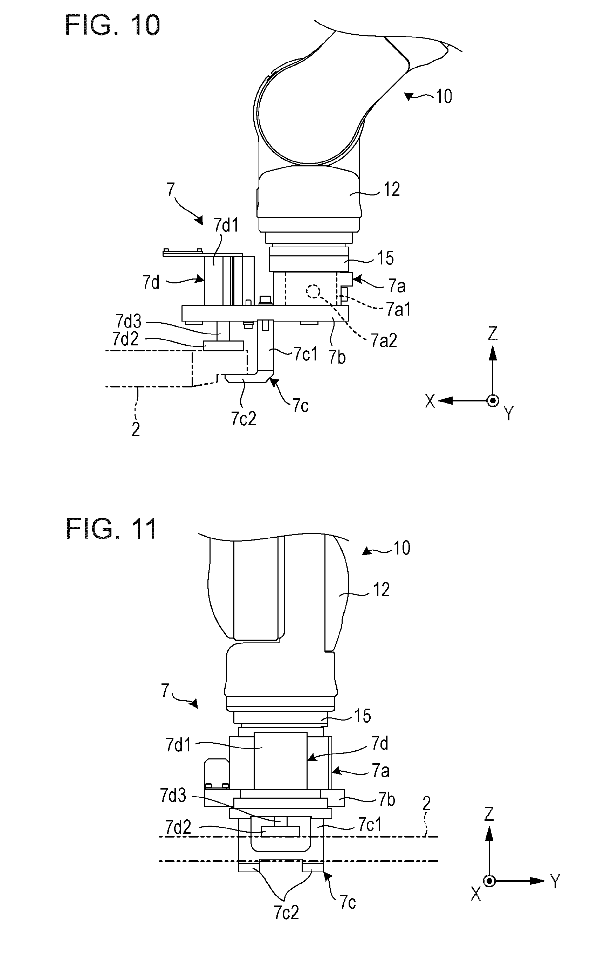

Firstly, the screen-printing-plate gripping hand 7 will be described. Fig. 10 is a schematic side view of the hand 7 attached to the right arm 12 and Fig. 11 is a schematic left side view of the hand 7 illustrated in Fig. 10. Although the hand 7 attached to the right arm 12 is exemplarily described below among the hands 7 attached to the left and right arms 11 and 12, the following description is also applicable to the hand 7 attached to the left arm 11 since the left and right hands 7 are substantially bilaterally symmetrical. In the following description, each hand is described using the expressions such as the "X-axis direction", the "Y-axis direction", and the "Z-axis direction". These expressions represent the "X-axis direction", the "Y-axis direction", and the "Z-axis direction" when the hand is in the position illustrated in the relative drawings, and are not meant to be limiting.

As illustrated in Figs. 10 and 11, the hand 7 includes a hand-side attachment portion 7a, a base member 7b, a hook portion 7c, and a clamp portion 7d. An insertion hole 7a1, into which the arm-side attachment portion 15 is insertable, is formed in the hand-side attachment portion 7a. Concave portions 7a2, in which the convex portions 15a of the arm-side attachment portion 15 can be fit, are formed in the inner circumferential surface of the hand-side attachment portion 7a defining the insertion hole 7a1.

Thus, as described above, when air is supplied to the convex portions 15a so as to protrude while the arm-side attachment portion 15 is inserted into the insertion hole 7a1 of the hand-side attachment portion 7a, the convex portions 15a are fitted in the concave portions 7a2 and thus the hand 7 is attached to the right arm 12.

The base member 7b has a substantially flat plate shape and is attached to the surface of the hand-side attachment portion 7a opposite to the surface to which the arm-side attachment portion 15 is attached. The hook portion 7c has a substantially L shape when viewed from the side and is attached to the base member 7b. Specifically, the hook portion 7c is connected to the base member 7b. The hook portion 7c includes a first hook piece 7c1 and multiple (for example, two) second hook pieces 7c2. The first hook piece 7c1 extends in the negative Z-axis direction from the bottom surface of the base member 7b. The second hook pieces 7c2 extend in the X-axis direction continuous with the lower end of the first hook piece 7c1 so as to be substantially perpendicular to the first hook piece 7c1.

The clamp portion 7d includes an actuator 7d1 and a pressing portion 7d2. The actuator 7d1 is, for example, an air cylinder and drives a rod 7d3 when supplied with air from the right arm 12 of the robot 10.

Specifically, for example, an air supply port (not illustrated) is formed in the surface of the arm-side attachment portion 15 of the right arm 12 to which the hand-side attachment portion 7a is attached. On the other hand, an air supply pipe (not illustrated), which connects the air supply port to the actuator 7d1 to supply air, is disposed in the hand 7. Thus, air ejected from the air supply port is supplied to the actuator 7d1 via the air supply pipe. Thus, the actuator 7d1 can move the rod 7d3 in the vertical direction (Z-axis direction), that is, reciprocate the rod 7d3 in the vertical direction in response to the supply of air or stop of the supply of air.

The pressing portion 7d2 is connected to an end of the rod 7d3. The pressing portion 7d2 is made of, for example, a material having a relatively high coefficient of friction (for example, an elastic body such as rubber) and having a substantially rectangular parallelepiped shape (plate shape). The pressing portion 7d2 is disposed at a position at which at least part of the bottom surface of the pressing portion 7d2 faces the second hook pieces 7c2 of the hook portion 7c.

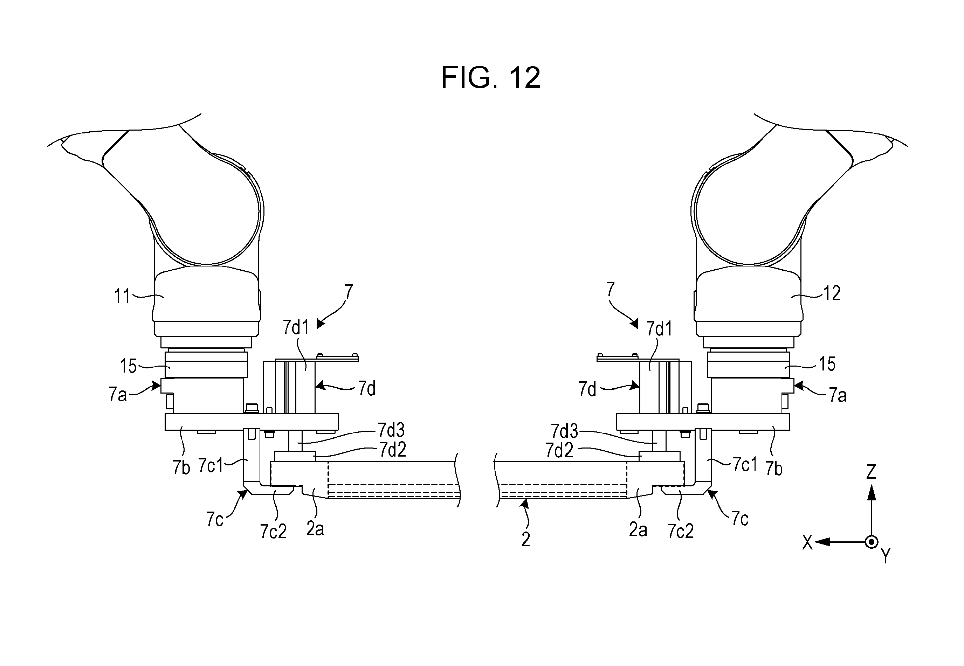

The hands 7 having the above-described configuration can grip the screen-printing plate 2 as illustrated in Fig. 12. Fig. 12 is a schematic side view of the hands 7 in the state of gripping the screen-printing plate 2.

Specifically, while the screen-printing plate 2, more specifically, the outer frame 2a, is disposed between the pressing portion 7d2 and the second hook pieces 7c2 of the hands 7, the actuators 7d1 are driven to move the rods 7d3 and the pressing portions 7d2 downward (in the negative Z-axis direction). Thus, the bottom surface of the outer frame 2a of the screen-printing plate 2 is supported by the second hook pieces 7c2, while the upper surface of the outer frame 2a is pressed by the pressing portions 7d2 as a result of the pressing portions 7d2 coming into contact with the upper surface. In this manner, the hands 7 can tightly grip the screen-printing plate 2 using the pressing portions 7d2 and the second hook pieces 7c2.

Moreover, since the pressing portions 7d2 are made of a material having a relatively high coefficient of friction, the pressing portions 7d2 are less likely to fail to grip the screen-printing plate 2 due to slippage.

Referring now to Fig. 6, portions of the screen-printing plate 2 gripped by the hands 7 will be described in detail. As illustrated in Fig. 6, the screen-printing plate 2 is a relatively large screen-printing plate having long sides of, for example, approximately 2 m and short sides of, for example, approximately 1 m. Thus, depending on the positions of the portions gripped by the hands 7, the screen-printing plate 2 may lose its balance during, for example, a transporting operation and may fail to be transported.

In view of this, the robotic system 1 according to the embodiment transports the screen-printing plate 2 while gripping different portions of the screen-printing plate 2 using multiple hands 7, specifically, gripping different portions on the long sides of the outer frame 2a of the screen-printing plate 2 (portions encircled with dotted circles 2a3 in Fig. 6). In addition, the portions 2a3 of the screen-printing plate 2 gripped by the multiple hands 7 are determined such that the center of gravity G of the screen-printing plate 2 is positioned between the portions 2a3. Thus, the hands 7 can transport the screen-printing plate 2 while stably gripping the screen-printing plate 2 and keeping a balance.

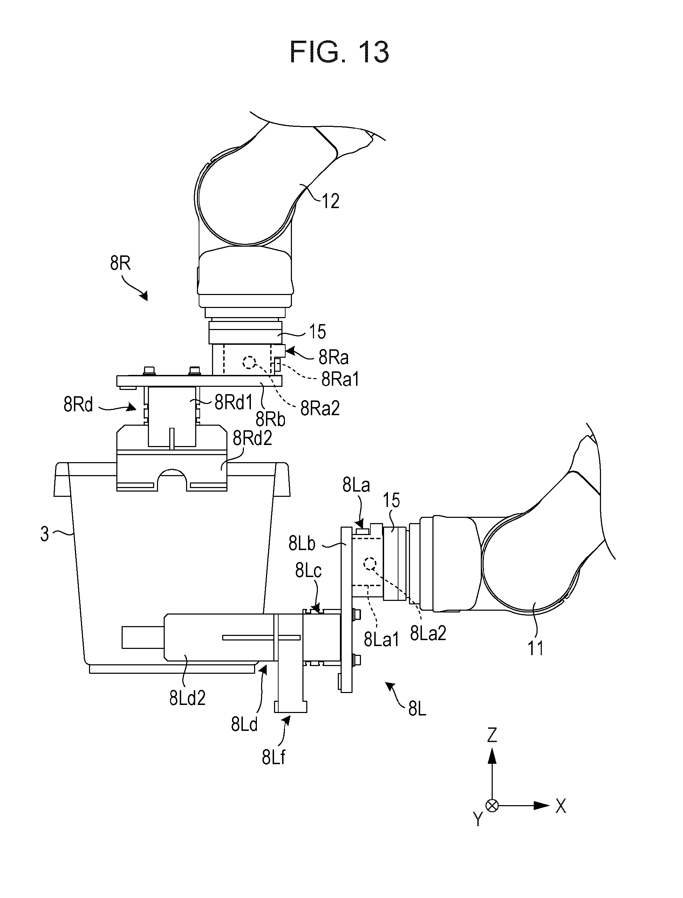

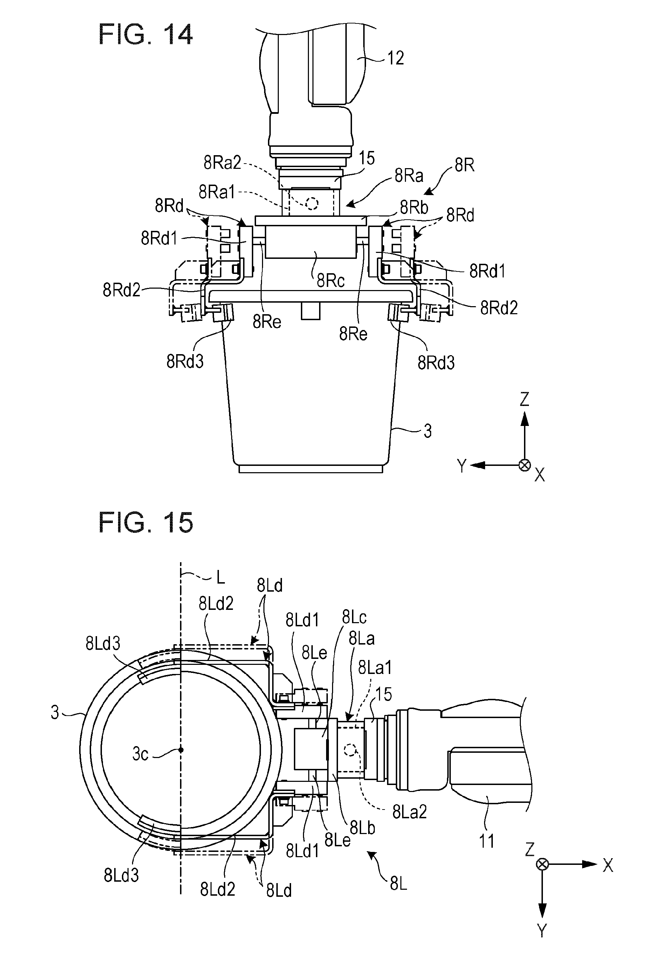

Now, the container gripping hands 8L and 8R will be described. Fig. 13 is a schematic side view of the hands 8L and 8R. Fig. 14 is a schematic left side view of the hand 8R illustrated in Fig. 13. Fig. 15 is a schematic bottom view of the hand 8L illustrated in Fig. 13. For ease of understanding, the illustration of the hand 8L is omitted in Fig. 14 and the illustration of the hand 8R is omitted in Fig. 15.

The hand 8R is attached to the right arm 12 and the hand 8L is attached to the left arm 11. The hands 8L and 8R are used for performing operations such as an operation of transporting the containers 3, a dye pouring operation of turning a container 3 upside down above the screen-printing plate 2 to pour a dye on the screen-printing plate 2, and an operation of detaching or attaching the lid portion 3b of the container 3. The hands 8L and 8R have different shapes so as to be usable for performing the above-described operations.

Firstly, the hand 8R is described. As illustrated in Figs. 13 and 14, the hand 8R includes a hand-side attachment portion 8Ra, a base member 8Rb, an actuator 8Rc, and hook portions 8Rd. The hand-side attachment portion 8Ra has substantially the same configuration as the hand-side attachment portion 7a of the screen-printing-plate gripping hand 7. Specifically, an insertion hole 8Ra1, into which the arm-side attachment portion 15 is insertable, is formed in the hand-side attachment portion 8Ra. Concave portions 8Ra2, into which the convex portions 15a of the arm-side attachment portion 15 can be fit, are formed in the inner circumferential surface of the hand-side attachment portion 8Ra defining the insertion hole 8Ra1. Since the hand-side attachment portion 8Ra has the above-described configuration, the hand 8R can be easily replaced.

The base member 8Rb has a substantially flat plate shape and is attached to the surface of the hand-side attachment portion 8Ra opposite to the surface to which the arm-side attachment portion 15 is attached. The actuator 8Rc is connected to the bottom surface of the base member 8Rb. The actuator 8Rc is, for example, an air cylinder and driven when supplied with air from the right arm 12 of the robot 10 to reciprocate rods 8Re. The mechanism of driving the actuator 8Rc with air is substantially the same as in the case of the actuator 7d1 and the description of the mechanism is thus omitted.

As well illustrated in Fig. 14, the rods 8Re are disposed so as to protrude in the Y-axis direction from the left and right side surfaces of the actuator 8Rc in Fig. 14. The hand 8R includes multiple (for example, two) rods 8Re, which are driven by the actuator 8Rc to reciprocate in the left and right directions (Y-axis direction) in Fig. 14.

The hook portions 8Rd are connected to the ends of the corresponding rods 8Re. When, for example, a container 3 is to be turned upside down, the hook portions 8Rd turn the container 3 upside down while gripping an upper portion of the container 3. Thus, the hook portion 8Rd has a configuration that corresponds to the shape of a gripped portion, that is, the upper portion, of the container 3.

Each hook portion 8Rd includes first, second, and third hook pieces 8Rd1, 8Rd2, and 8Rd3. The first hook piece 8Rd1 has a substantially rectangular parallelepiped shape and is connected to the end of the rod 8Re. As illustrated in Fig. 14, the second hook piece 8Rd2 has such a shape that one end of the second hook piece 8Rd2 is connected to the first hook piece 8Rd1 and another end of the second hook piece 8Rd2 is extended to a position below the bottom surface of the container-body gripper 3a3 of the container 3. The third hook piece 8Rd3 is made of, for example, a material having a relatively high coefficient of friction (for example, an elastic body such as rubber) and is connected to another end of the second hook piece 8Rd2.

Since the hand 8R has the above-described configuration, the hand 8R can grip an upper portion of the container 3 as illustrated in Fig. 14. Specifically, while the container 3 is disposed between a pair of hook portions 8Rd, more specifically, between the third hook pieces 8Rd3, the actuator 8Rc is driven so as to reduce the distance between the third hook pieces 8Rd3 by reducing the amount by which the rods 8Re protrude. Consequently, the hand 8R can grip an upper portion of the container 3 using the third hook pieces 8Rd3 of the hook portions 8Rd such that the third hook pieces 8Rd3 are hooked to the container-body gripper 3a3 at an upper portion of the container 3. In Fig. 14, the hook portions 8Rd before gripping the container 3 are drawn with imaginary lines.

Moreover, since the third hook pieces 8Rd3 are made of a material having a relatively high coefficient of friction, the third hook pieces 8Rd3 are less likely to fail to grip the container 3 due to slippage.

As illustrated in Figs. 13 and 15, the hand 8L, on the other hand, includes a hand-side attachment portion 8La, a base member 8Lb, an actuator 8Lc, and hook portions 8Ld. The hand-side attachment portion 8La has substantially the same configuration as the hand-side attachment portion 7a of the screen-printing-plate gripping hand 7. Specifically, an insertion hole 8La1, into which the arm-side attachment portion 15 is insertable, is formed in the hand-side attachment portion 8La. Concave portions 8La2, in which the convex portions 15a of the arm-side attachment portion 15 can be fit, are formed in the inner circumferential surface of the hand-side attachment portion 8La defining the insertion hole 8La1. Since the hand-side attachment portion 8La has the above-described configuration, the hand 8L can be easily replaced.

The base member 8Lb has a substantially flat plate shape and is attached to the surface of the hand-side attachment portion 8La opposite to the surface to which the arm-side attachment portion 15 is attached. The actuator 8Lc is connected to the side surface of the base member 8Lb. The actuator 8Lc is, for example, an air cylinder and driven when supplied with air from the left arm 11 of the robot 10 to reciprocate rods 8Le. The mechanism of driving the actuator 8Lc with air is substantially the same as in the case of the actuator 7d1 and the description of the mechanism is thus omitted.

As well illustrated in Fig. 15, the rods 8Le are disposed so as to protrude in the Y-axis direction from the side surfaces of the actuator 8Rc, that is, the upper and lower surfaces in Fig. 15. The hand 8L includes multiple (for example, two) rods 8Le, which are driven by the actuator 8Lc to reciprocate in the upward and downward directions (Y-axis direction) in Fig. 15.

Hook portions 8Ld are connected to the ends of the rods 8Le. When, for example, a container 3 is to be turned upside down, the hook portions 8Ld turn the container 3 upside down while gripping a lower portion of the container 3. Thus, each hook portion 8Ld has a configuration that corresponds to the shape of a gripped portion, the lower portion, of the container 3.

Specifically, each hook portion 8Ld includes first, second, and third hook pieces 8Ld1, 8Ld2, and 8Ld3. The first hook piece 8Ld1 has a substantially rectangular parallelepiped shape and is connected to the end of the rod 8Le. As illustrated in Fig. 15, the second hook piece 8Ld2 has such a shape that one end of the second hook piece 8Ld2 is connected to the first hook piece 8Ld1 and another end of the second hook piece 8Ld2 is extended to a position beyond the center line L, which passes the center (or the center of gravity) 3C of the container 3 when viewed in a bottom view and is parallel to the Y-axis direction. The third hook piece 8Ld3 is made of, for example, a material having a relatively high coefficient of friction (for example, an elastic body such as rubber) and is connected to another end of the second hook piece 8Ld2.

Since the hand 8L has the above-described configuration, the hand 8L can grip a lower portion of the container 3 as illustrated in Fig. 15. Specifically, while the container 3 is disposed between a pair of hook portions 8Ld, more specifically, between the third hook pieces 8Ld3, the actuator 8Lc is driven so as to reduce the distance between the third hook pieces 8Ld3 by reducing the amount by which the rods 8Le protrude. Consequently, the hand 8L can grip a lower portion of the container 3 using the third hook pieces 8Ld3 of the hook portions 8Ld. In Fig. 15, the hook portions 8Ld before gripping the container 3 are drawn with imaginary lines.

Moreover, since the third hook pieces 8Ld3 are made of a material having a relatively high coefficient of friction, the third hook pieces 8Ld3 are less likely to fail to grip the container 3 due to slippage.

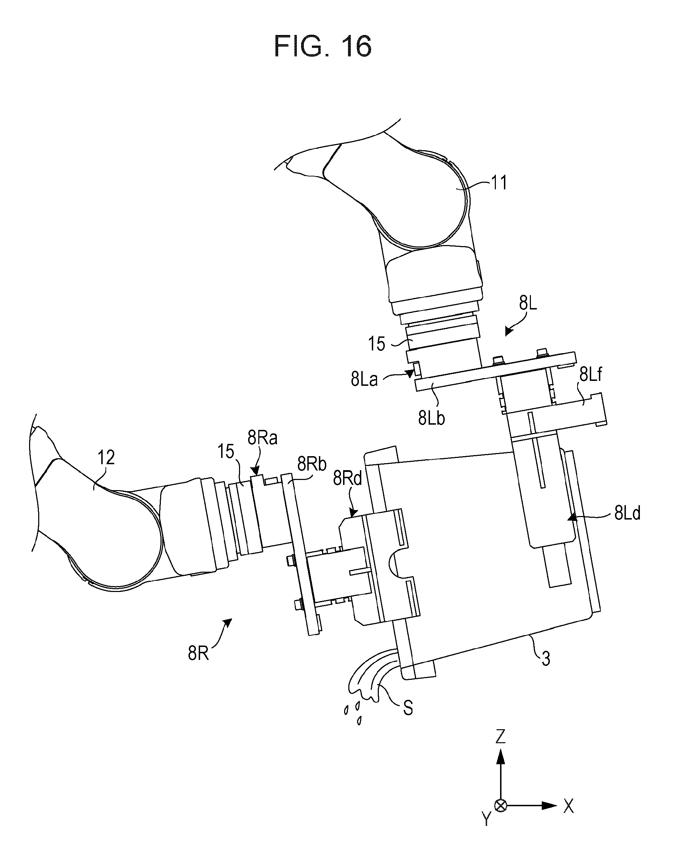

Fig. 16 is a schematic side view of the hands 8L and 8R similar to Fig. 13 in the state of turning the container 3 upside down while gripping the container 3. As understood from Fig. 13 and Fig. 16 in comparison, since the hand 8R grips an upper portion of the container 3 and the hand 8L grips a lower portion of the container 3, the container 3 can be tilted at a predetermined angle (for example, approximately 100°). Thus, the robot 10 can be caused to perform, for example, a dye pouring operation of pouring a dye S contained in the container 3 on the screen 2b of the screen-printing plate 2.

As described above, each hook portion 8Rd of the hand 8R and each hook portion 8Ld of the hand 8L have different shapes so as to correspond to the shapes of the portions of the container 3 that the hook portions 8Rd and 8Ld grip. Thus, the container 3 can be turned upside down while the hands 8R and 8L are reliably gripping the container 3.

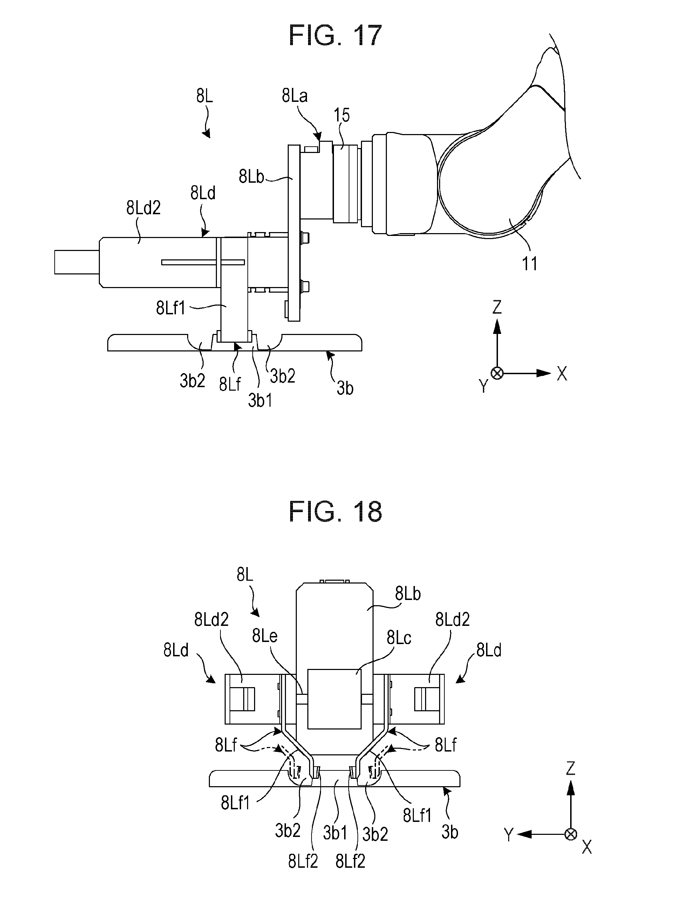

As illustrated in Fig. 13, the hand 8L also includes lid hook portions 8Lf that grip the lid portion 3b of the container 3. Fig. 17 is a schematic side view of the hand 8L in the state of gripping the lid portion 3b of the container 3. Fig. 18 is a schematic left side view of the hand 8L illustrated in Fig. 17.

As illustrated in Figs. 17 and 18, each lid hook portion 8Lf includes a first lid hook piece 8Lf1 and a second lid hook piece 8Lf2. The first lid hook piece 8Lf1 has such a shape that the first lid hook piece 8Lf1 extends vertically downward (negative Z-axis direction) from one end and another end of the first lid hook piece 8Lf1 is connected to the second hook pieces 8Ld2 of the hook portion 8Ld. The second lid hook piece 8Lf2 is made of, for example, a material having a relatively high coefficient of friction (for example, an elastic body such as rubber) and is connected to another end of the first lid hook piece 8Lf1.

Since the hand 8L has the above-described configuration, the hand 8L can lift the lid portion 3b of the container 3 while gripping the lid portion 3b as illustrated in Fig. 18. Specifically, the hand 8L inserts the second lid hook pieces 8Lf2 of the lid hook portions 8Lf into the hollow 3b2 and positions the lid knob 3b1 between a pair of lid hook portions 8Lf, more specifically, between the second lid hook pieces 8Lf2. In this state, the actuator 8Lc is driven so as to reduce the distance between the second lid hook pieces 8Lf2 by reducing the amount by which the rods 8Le protrude. Consequently, the hand 8L can grip the lid portion 3b using the second lid hook pieces 8Lf2 of the lid hook portions 8Lf. In Fig. 18, the lid hook portions 8Lf before gripping the lid portion 3b are drawn with imaginary lines.

Moreover, since the second lid hook pieces 8Lf2 are made of a material having a relatively high coefficient of friction, the second lid hook pieces 8Lf2 are less likely to fail to grip the lid portion 3b due to slippage.

In addition, since the hands 8L and 8R have the above-described configurations, the paired hands 8L and 8R can perform multiple types of operations such as gripping and transporting a container 3 using the hand 8R, gripping and turning the container 3 upside down using the hands 8L and 8R, and gripping and lifting the lid portion 3b of the container 3 using the hand 8L. These configurations eliminate the need for replacement of hands when, for example, the operation of detaching the lid portion 3b is switched to the operation of transporting the container 3, whereby the printing operation can be efficiently performed.

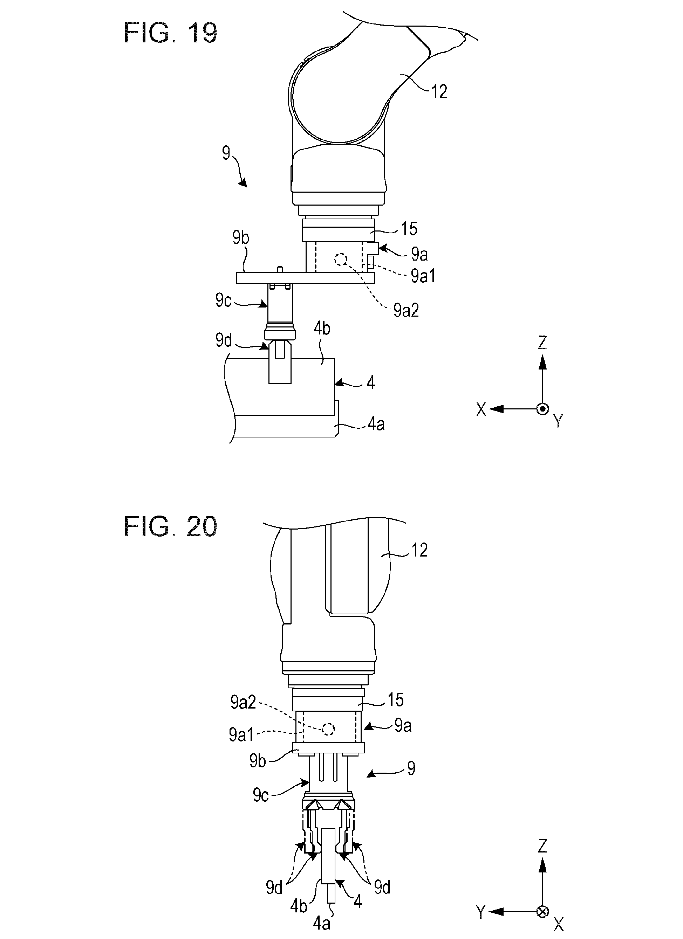

Now, a squeegee gripping hand 9 will be described. Fig. 19 is a schematic side view of the hand 9 and Fig. 20 is a schematic left side view of the hand 9 illustrated in Fig. 19. Among the hands 9 attached to the left and right arms 11 and 12, the hand 9 for the right arm 12 is described as an example below. However, the following description is also applicable to the hand 9 attached to the left arm 11 since the left and right hands 9 are substantially bilaterally symmetrical.

The hand 9 includes a hand-side attachment portion 9a, a base member 9b, an actuator 9c, and a hook portion 9d. The hand-side attachment portion 9a has substantially the same configuration as the hand-side attachment portion 7a of the hand 7 or the like. Specifically, an insertion hole 9a1, into which the arm-side attachment portion 15 is insertable, is formed in the hand-side attachment portion 9a. Concave portions 9a2, in which the convex portions 15a of the arm-side attachment portion 15 can be fit, are formed in the inner circumferential surface of the hand-side attachment portion 9a defining the insertion hole 9a1. Since the hand-side attachment portion 9a has the above-described configuration, the hand 9 can be easily replaced.

The base member 9b has a substantially flat plate shape and is attached to the surface of the hand-side attachment portion 9a opposite to the surface to which the arm-side attachment portion 15 is attached. The actuator 9c is connected to the bottom surface of the base member 9b. The actuator 9c is, for example, an air cylinder and driven when supplied with air from the right arm 12 to reciprocate rods, not illustrated. The mechanism of driving the actuator 9c with air is substantially the same as in the case of the actuator 7d1 or the like and the description of the mechanism is thus omitted.

Although not illustrated, the rods of the actuator 9c are driven to reciprocate in the left and right directions (Y-axis direction) in Fig. 20 as in the case of the actuator 8Rc. Hook portions 9d are connected to the respective rod. The hook portions 9d have a substantially rectangular parallelepiped shape. The hook portions 9d are configured so as to be capable of gripping the squeegee gripper 4b of the squeegee 4 using the end portion opposite to the end portion connected to the actuator 9c (that is, the lower end portion in Figs. 19 and 20).

Since the hand 9 has the above-described configuration, the hand 9 can grip the squeegee 4 as illustrated in Fig. 20. Specifically, while the squeegee 4 is disposed between a pair of hook portions 9d, the actuator 9c is driven so as to reduce the distance between the hook portions 9d. Consequently, the hand 9 can grip the squeegee gripper 4b of the squeegee 4. In Fig. 20, the hook portions 9d before gripping the squeegee 4 are drawn with imaginary lines.

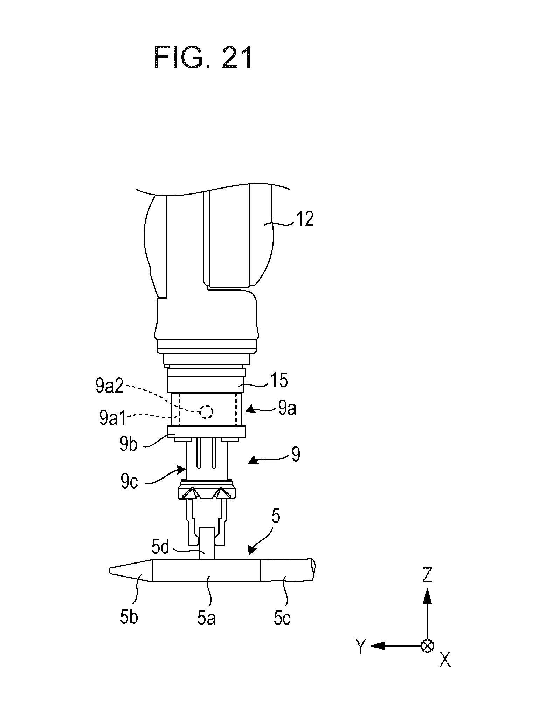

Besides the squeegee 4, the hand 9 also grips and lifts, for example, a vacuum 5. Fig. 21 is a schematic left side view of the hand 9, which is similar to Fig. 20, in the state of gripping the vacuum 5.

As illustrated in Fig. 21, the hand 9 can lift the vacuum 5 by gripping the vacuum handle 5d of the vacuum 5. Since the operation that the hand 9 performs when gripping the vacuum 5 is similar to the operation when gripping the squeegee 4, the description of the operation is omitted.

Consequently, the robotic system 1 can perform operations such as transporting the vacuum 5 to a position above the screen-printing plate 2 while the vacuum handle 5d of the vacuum 5 is gripped by the hands 9 and removing a surplus dye remaining over the screen-printing plate 2 by sucking the surplus dye with the vacuum 5.

In addition, since the hands 9 have the above-described configurations, the hands 9 can perform multiple types of operations such as transporting the squeegee 4, squeegeeing with the squeegee 4, and then sucking a surplus dye remaining over the screen-printing plate 2. This configuration eliminates the need for replacement of hands when the squeegeeing operation is switched to the operation of removing a surplus dye remaining over the screen-printing plate 2 by sucking the surplus dye, whereby the printing operation can be efficiently performed.

Referring back to Figs. 1 to 4, the robot hand stand 70 will be described now. The robot hand stand 70 is a stand on which the hands 7, 8L, 8R, and 9 are placed. As well illustrated in Figs. 1 and 4, the robot hand stand 70 is arranged in the work space 6, specifically, in a position adjacent to the print workbench 20. In Figs. 1 to 4, illustrations of the hands 7, 8L, 8R, and 9 are omitted for ease of illustration.

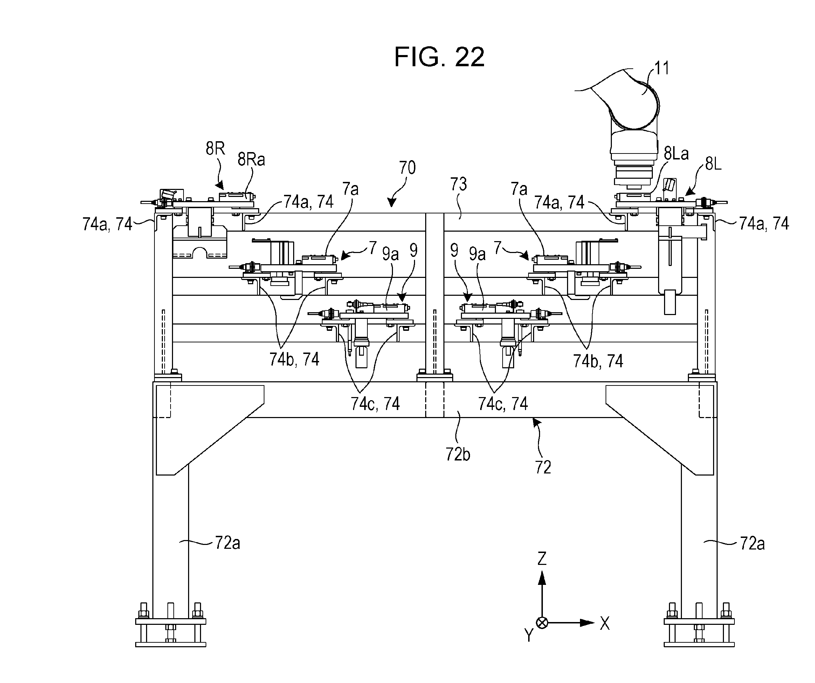

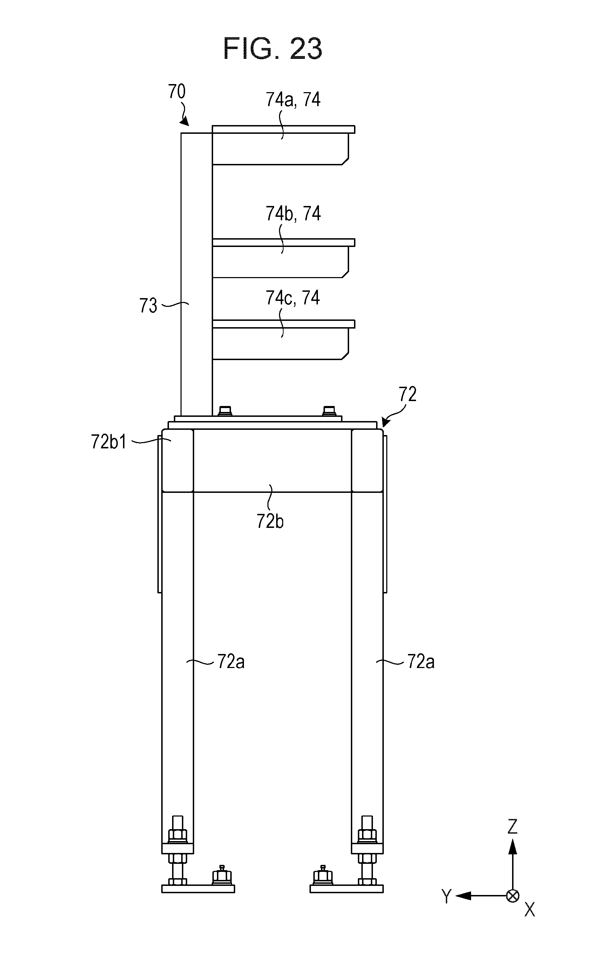

Fig. 22 is a schematic side view of the robot hand stand 70 and Fig. 23 is a schematic left side view of the robot hand stand 70 illustrated in Fig. 22. Illustrations of the hands 7, 8L, 8R, and 9 are omitted also in Fig. 23 for ease of illustration.

As illustrated in Figs. 22 and 23, the robot hand stand 70 includes a table portion 72, a backboard portion 73, and hand rest portions 74. The table portion 72 includes multiple (for example, four) legs 72a and a top board 72b supported by the legs 72a. The table portion 72 has a substantially rectangular parallelepiped shape.

The backboard portion 73 extends vertically upward, in other words, in the positive Z-axis direction from the upper surface of the top board 72b at an end side 72b1 of the top board 72b, which is at the edge in the short side. The hand rest portions 74 include multiple (for example, twelve) L-angle brackets. Each L-angle bracket is connected to the backboard portion 73 so as to protrude from the backboard portion 73 in the horizontal direction (for example, negative Y-axis direction).

As illustrated in Fig. 22, each hand rest portion 74 is configured so as to support one hand with multiple (for example, two) L-angle brackets. The hand rest portions 74 are disposed at different levels of the backboard portion 73 in the Z-axis direction corresponding to different hands placed on the hand rest portions 74. Hereinbelow, the hand rest portions 74 disposed at the top level of the backboard portion 73 are referred to as "top hand rest portions 74a", the hand rest portions 74 disposed below the top hand rest portions 74a are referred to as "middle hand rest portions 74b", and the hand rest portions 74 disposed below the middle hand rest portions 74b are referred to as "bottom hand rest portions 74c".

The top hand rest portions 74a are positioned near the left and right ends of the backboard portion 73 in Fig. 22. The hands 8L and 8R are placed on the top hand rest portions 74a. The bottom hand rest portions 74c are positioned near the middle of the backboard portion 73 in Fig. 22. The hands 9 are placed on the bottom hand rest portions 74c. The middle hand rest portions 74b are each positioned between one top hand rest portion 74a and one bottom hand rest portion 74c in the X-axis direction. The hands 7 are placed on the middle hand rest portions 74b.

In this manner, the hand rest portions 74a, 74b, and 74c are disposed at different positions in the X-axis direction. Specifically, in the state where the hands 7, 8L, 8R, and 9 are placed on the corresponding hand rest portions 74a, 74b, and 74c, the hand rest portions 74a, 74b, and 74c are disposed at different positions such that at least the hand-side attachment portions 7a, 8La, 8Ra, and 9a of the hands 7, 8L, 8R, and 9 do not overlap each other in the X-axis direction.

In this configuration, the left and right arms 11 and 12 can access, from above the robot hand stand 70, whichever of the hands are to be attached thereto, whereby attachment of the hands is facilitated.

Moreover, in the state where the hands 7, 8L, 8R, and 9 are placed on the corresponding hand rest portions 74a, 74b, and 74c, the hand rest portions 74a, 74b, and 74c are disposed such that portions of the hands 7, 8L, 8R, and 9 other than the hand-side attachment portions 7a, 8La, 8Ra, and 9a overlap each other in the X-axis direction. This configuration can save the space in the X-axis direction in which the robot hand stand 70 is arranged.

Even when the hands 7, 8L, 8R, and 9 partially overlap in the X-axis direction, the arms 11 and 12 to which the hands 7, 8L, 8R, or 9 are attached do not interfere with other hands if the arms 11 and 12 are controlled so as to move in a direction away from the robot hand stand 70 after moving a predetermined distance in the negative Y-axis direction.

The positions of the robot hand stand 70 at which the hands are placed, the order in which the hands are placed, and other conditions described above are only exemplary and not meant to be limiting.

Referring back to Figs. 1 to 4, each dye-container scale stand 80 is a stand on which the container 3 is weighed. Each dye-container scale stand 80 is arranged in the work space 6, specifically, in a position adjacent to the robot hand stand 70.

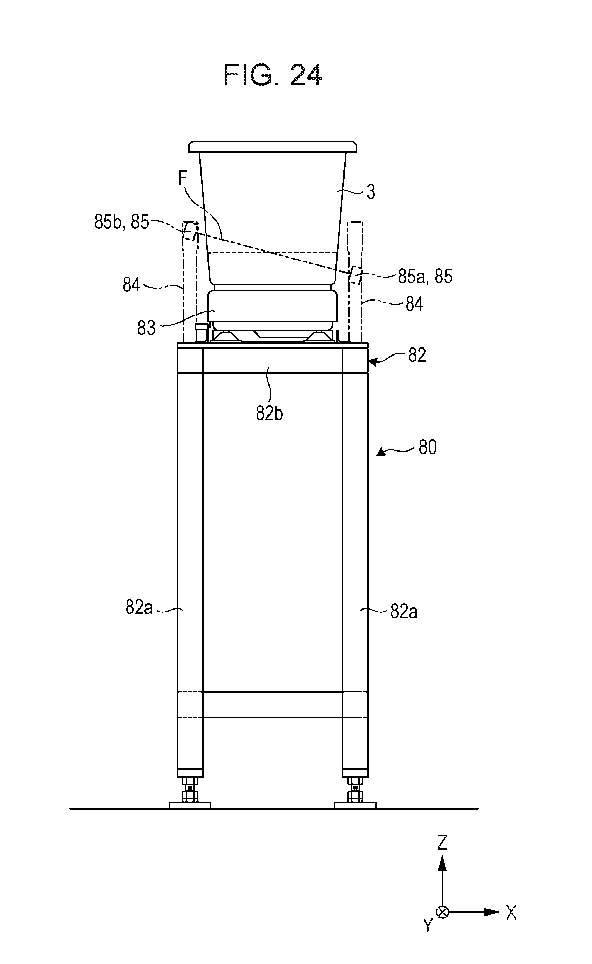

Fig. 24 is a schematic side view of one dye-container scale stand 80. As illustrated in Fig. 24, the dye-container scale stand 80 includes a table portion 82 and a scale 83. The table portion 82 includes multiple (for example, four) legs 82a and a top board 82b supported by the legs 82a. The table portion 82 has a substantially rectangular parallelepiped shape. The scale 83 is placed on the upper surface of a top board 82b of the table portion 82. When a container 3 is placed on the scale 83, the scale 83 outputs a signal indicating the weight of the container 3 to the controller 90.

The above-described dye-container scale stands 80 are used, for example, to detect the amount of dye remaining in the container 3 by weighing the container 3 using the scale 83, but this is not the only way to detect the amount of remaining dye. Specifically, as drawn with imaginary lines in Fig. 24, for example, the amount of dye remaining in the container 3 may be detected using a sensor attachment portion 84, provided so as to extend vertically upward from the top board 82b of the table portion 82, and a photoelectric sensor 85 attached to the sensor attachment portion 84.

Specifically, the photoelectric sensor 85 includes a light emitting portion 85a that emits light F and a light receiving portion 85b that receives the light F emitted by the light emitting portion 85a. The photoelectric sensor 85 may transmit information on the state of the light F received by the light receiving portion 85b, specifically, the state of light representing the amount of dye remaining in the container 3 to the controller 90 and the controller 90 may calculate the remaining amount on the basis of the information. In Fig. 24, the surface of the dye is drawn with a dotted line.

The controller 90 will be described now. The controller 90 is a device that controls operations of the robotic system 1 and is, for example, a computer. The controller 90 controls the operations of the robotic system 1 on the basis of data instructed in advance, for example, operations of arms or hands of the robot 10.

As illustrated in Fig. 2, the robotic system 1 also includes imaging units (reference-portion detecting units) 91 that respectively capture images of the long hole 2a1 and the through hole 2a2 of the screen-printing plate 2. The imaging units 91 are, for example, charge-coupled device (CCD) cameras and disposed at multiple (for example, two) positions.

The imaging units 91 are positioned above the positions passed by the long hole 2a1 and the through hole 2a2 of the screen-printing plate 2 when, for example, the robot 10 transports the screen-printing plate 2. Specifically, in the side view of Fig. 2, one imaging unit 91 is disposed above the space between the screen set stand 30 and the print workbench 20 and another imaging unit 91 is disposed above the dye-container scale stands 80. Hereinbelow, the imaging unit 91 near the screen set stand 30 is referred to as a "first imaging unit 91a" and the imaging unit 91 near the dye-container scale stands 80 is referred to as a "second imaging unit 91b".

While the robot 10 is performing the operation of transporting the screen-printing plate 2 from the screen set stand 30 to the print workbench 20, the first imaging unit 91a captures an image of the long hole 2a1, positioned at the trailing end of the screen-printing plate 2 in the travel direction of the screen-printing plate 2, when the long hole 2a1 passes immediately below the first imaging unit 91a.

Thereafter, the robot 10 moves the screen-printing plate 2 in the positive Y-axis direction until the through hole 2a2 positioned at the leading end of the screen-printing plate 2 in the travel direction of the screen-printing plate 2 arrives at the position immediately below the second imaging unit 91b and then the second imaging unit 91b captures an image of the through hole 2a2 that passes immediately below the second imaging unit 91b.

The first and second imaging units 91a and 91b transmit image data of the captured images of the long hole 2a1 and the through hole 2a2 to the controller 90. The controller 90 analyses the image data transmitted from the first and second imaging units 91a and 91b and detects the current position of the screen-printing plate 2. The controller 90 adjusts the position of the screen-printing plate 2 to a predetermined position on the basis of the detected current position.

Specifically, for example, the controller 90 calculates the virtual line that connects the long hole 2a1 and the through hole 2a2 together on the basis of the image data. The controller 90 controls the operations of the left and right arms 11 and 12 and the hands 7 such that the virtual line becomes substantially parallel to the Y-axis direction and substantially coincides with the positioning protrusions 24a and 24b on the print workbench 20 in the X-axis direction so as to adjust the position of the screen-printing plate 2.

In this manner, the controller 90 can adjust the position of the screen-printing plate 2 and transport the screen-printing plate 2 to a predetermined position on the print workbench 20. The predetermined position here means, for example, a position at which the positioning protrusions 24a and 24b reliably fit in the long hole 2a1 and the through hole 2a2 of the screen-printing plate 2.

Specifically, since the outer frame 2a of the screen-printing plate 2 is formed by welding rectangular pillars made of a material such as aluminum together, the size and other dimensions of the outer frame 2a widely vary from product to product. Such product-to-product variation may cause a situation where, when the screen-printing plate 2 is transported corresponding to, for example, data instructed in advance, the long hole 2a1 and the through hole 2a2 of the screen-printing plate 2 fail to fit on the protrusions 24a and 24b or the screen 2b of the screen-printing plate 2 fails to coincide with the subject 21 on the print workbench 20. In such a case, the printing operation may be performed at an incorrect position.

In the robotic system 1 according to the embodiment, the long hole 2a1 and the through hole 2a2 of the screen-printing plate 2 are caused to function as reference portions used as references during the transporting operation. The robotic system 1 detects the reference portions of the screen-printing plate 2 transported by the hands 7 using the first and second imaging units 91a and 91b. The robotic system 1 then adjusts the position of the screen-printing plate 2 on the basis of the detected long hole 2a1 and through hole 2a2, functioning as the reference portions, and transports the screen-printing plate 2 to a predetermined position of the print workbench 20.

With this configuration, a design or the like can be printed on a subject 21 at a correct position in the subsequent printing operation, whereby the quality of the printing operation can be improved. Although the long hole 2a1 and the through hole 2a2 are used as the reference portions in the above description, the reference portions are not limited to these holes. For example, cross marks or rectangular marks may be used as the reference portions.

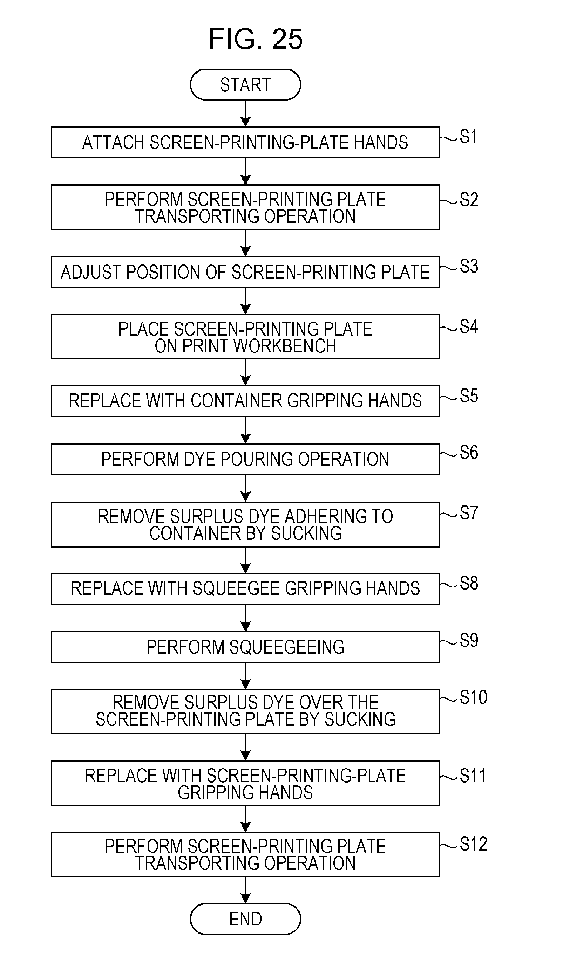

Referring now to Fig. 25, the operation flow performed by the robotic system 1 will be described now. Fig. 25 is a flow chart of a series of steps performed by the robotic system 1 during the printing operation. The sequence of steps is input by an operator to the controller 90 through a simulator, not illustrated, as instructed data. The robotic system 1 performs the operations illustrated in Fig. 25 under the control of the controller 90.

As illustrated in Fig. 25, firstly, the robotic system 1 attaches the screen-printing-plate gripping hands 7 to the left and right arms 11 and 12 (Step S1). Then, the robotic system 1 performs the transporting operation including gripping the screen-printing plate 2 placed on the screen set stand 30 with the hands 7 of the robot 10 and transporting the screen-printing plate 2 to the print workbench 20 (Step S2). Here, the screen-printing plate 2 is set in advance at a predetermined position on the screen set stand 30.

The robotic system 1 then captures images of the long hole 2a1 and the through hole 2a2 of the screen-printing plate 2 that is being transported using the first and second imaging units 91a and 91b and adjusts the position of the screen-printing plate 2 (Step S3). The robot 10 then places the screen-printing plate 2 whose position has been adjusted on the print workbench 20, more specifically, on the raising-and-lowering units 23a and 23b (Step S4). Here, the raising-and-lowering units 23a and 23b are in the raised positions, that is, in such positions that the screen 2b of the screen-printing plate 2 and the subject 21 of the print workbench 20 are not in contact with each other.

Subsequently, the robotic system 1 replaces the hands 7 attached to the left and right arms 11 and 12 with the container gripping hands 8L and 8R (Step S5) and performs the dye pouring operation (Step S6). Specifically, the robot 10 picks up the lid portion 3b of the container 3 on the dye-container stand 50 using the hand 8L and places the lid portion 3b in a predetermined position. Then, the robot 10 grips the container 3 on the dye-container stand 50 using the hand 8R and transports the container 3 to a position above the screen-printing plate 2. Here, before transporting the container 3 to a position above the screen-printing plate 2, the container 3 may be transported to one of the dye-container scale stands 80 for weighing.

The robot 10 then grips the container 3 transported to the position above the screen-printing plate 2 using the hands 8L and 8R and turns the container 3 upside down to pour the dye on the screen-printing plate 2 as illustrated in Fig. 16. Thus, the dye pouring operation is finished.

The robot 10 then grips the container 3 with the hand 8R and brings the container 3 toward the suction port 5b of the vacuum 5 on the vacuum stand 60. Thus, the surplus dye adhering to the outer circumferential surface of the container 3 during the dye pouring operation is removed by being sucked by the vacuum 5 (Step S7). When the operation of Step S7 is finished, the robot 10 returns the container 3 to the dye-container stand 50 and the lid portion 3b, placed in the predetermined position, to the original state with the hand 8L.

Subsequently, the robotic system 1 replaces the container gripping hands 8L and 8R attached to the left and right arms 11 and 12 with the squeegee gripping hands 9 (Step S8) and performs the squeegeeing operation (Step S9). Specifically, the robot 10 firstly picks up a squeegee 4 from the squeegee rack 40 using the hands 9 and transports the squeegee to a position above the screen-printing plate 2. The robot 10 then slides the squeegee 4 over the screen 2b of the screen-printing plate 2 so that the dye poured on the screen 2b during the dye pouring operation spreads throughout the screen 2b.

The robotic system 1 then lowers the raising-and-lowering units 23a and 23b on which the screen-printing plate 2 is placed to bring the screen 2b of the screen-printing plate 2 into contact with the subject 21 on the print workbench 20. The robot 10 then grips the squeegee 4 with the hands 9 and slides the squeegee 4 over the screen 2b of the screen-printing plate 2. Thus, the squeegeeing operation is finished. Consequently, a design or the like is printed on the subject 21.

In this squeegeeing operation, a desired pressure with which the squeegee 4 is pressed against the screen 2b, a desired angle of the squeegee 4 with respect to the screen 2b, and other desired parameters are input in advance by an operator through an input device (for example, a touch panel), not illustrated. The data indicating those desired parameters is stored in the controller 90. Thus, when the controller 90 controls the operations of the left and right arms 11 and 12 and the hands 9 on the basis of the stored data, the pressure of the squeegee 4 or other parameters can reliably satisfy the desired values.

When desired values of parameters, such as the pressure of the squeegee 4, of different types of the screen-printing plates 2 are stored in the controller 90, the controller 90 can control the squeegee 4 such that the squeegee 4 performs the operation at the pressure appropriate for each screen-printing plate 2 and other parameters, whereby the quality of the printed subject 21 can be improved.

Parameters such as the pressure or the angle of the squeegee 4 can be immediately and easily adjusted because the parameters such as the pressure or the angle of the squeegee 4 can be changed by an operator operating an input device.

Referring back to Fig. 25, the robot 10 then returns the squeegee 4 to the squeegee rack 40 and pulls up the vacuum 5 on the vacuum stand 60 using the hands 9 to detach the vacuum 5 from the vacuum stand 60. Thereafter, the robot 10 grips the vacuum handle 5d with the hands 9 and transports the vacuum 5 to a position above the screen-printing plate 2 to remove the surplus dye remaining over the screen-printing plate 2 by sucking the surplus dye with the vacuum 5 (Step S10). When the operation of Step S10 is finished, the robot 10 returns the vacuum 5 to the vacuum stand 60.

Subsequently, the robotic system 1 replaces the squeegee gripping hands 9 attached to the left and right arms 11 and 12 with the screen-printing-plate gripping hands 7 (Step S11). The robot 10 then grips the screen-printing plate 2 placed on the print workbench 20 and transports the screen-printing plate 2 to the screen set stand 30 (Step S12). Thus, the steps of the printing operation are finished.

As described above, the robotic system 1 can perform the printing operation using only the robot 10. Moreover, performing the printing operation using the robot 10 can reduce the product-to-product variation in quality of the printed subject 21.

As described above, the robotic system 1 according to the embodiment causes the robot 10 to perform a predetermined operation while the hands attached to the left and right arms 11 and 12 are replaced in accordance with the types of workpieces and the left and right arms 11 and 12 to which the hands are attached are caused to perform operations in accordance with the types of workpieces in cooperation with each other. Thus, the robotic system 1 can cause the robot 10 to perform appropriate operations even in the case where the robot 10 has to perform multiple different types of operations in accordance with multiple types of workpieces.

In the above-described embodiment, when the hands are to be replaced, both hands attached to the left and right arms 11 and 12 are replaced. However, this operation is not the only way of replacing hands. For example, only the hand to be attached to one of the left and right arms 11 and 12 may be replaced.

Moreover, the printing operation has been described thus far as an example of a predetermined operation performed by the robot 10, but the predetermined operation is not limited to the printing operation. The operation may be another operation as long as the operation involves different types of operations in accordance with different types of workpieces.

Moreover, the hands have been described as examples of the end effectors, but the end effectors are not limited to hands. For example, the end effectors may be, for example, suction portions that suck and transport workpieces.

The actuators 7d1, 8Rc, 8Lc, and 9c are described as air cylinders for exemplary purposes. The actuators may be other driving devices such as motors that are electrically connected to arms to which the devices are attached and that actuate end effectors.

The robot 10 is described as a seven-axis robot, but this is not the only possible configuration. Robots other than a seven-axis robot, such as a six-axis robot or eight-axis robot may be used as the robot 10.

Other effects or modifications may be easily derived by those skilled in the art. Thus, the specific details or exemplary embodiments described above do not limit a broader range of the invention. Accordingly, various modifications may be made without departing from the spirit or scope of the overall concept of the invention defined by the scope of the appended claims or the equivalents thereof.

## Claims

1. A robotic system (1) **characterized by** comprising:
a robot (10) attached to a ceiling in a work space and including a plurality of arms (11, 12);
a plurality of end effectors removably attached to the plurality of arms (11, 12), respectively; and
a controller (90) that causes the robot (10) to perform a predetermined operation by replacing at least one end effector attached to at least one of the plurality of arms in accordance with a type of a workpiece and causing the plurality of arms to which the end effectors are attached to perform an operation in accordance with the type of the workpiece in cooperation with each other.

2. The robotic system (1) according to Claim 1, **characterized in that**
the end effectors are hands (7, 8L, 8R, 9), and
the controller (90) controls operations of the plurality of arms (11, 12) and the plurality of hands (7, 8L, 8R, 9) such that the workpiece is turned upside down using the plurality of hands (7, 8L, 8R, 9) while different portions of the workpiece are gripped with the plurality of hands (7, 8L, 8R, 9).

3. The robotic system (1) according to Claim 2, **characterized in that**
the plurality of arms (11, 12) are two arms, and
the plurality of hands (7, 8L, 8R, 9) attached to the two arms respectively have hook portions having different shapes that correspond to shapes of the portions of the workpiece gripped by the respective hands (7, 8L, 8R, 9).

4. The robotic system (1) according to Claim 2 or 3, **characterized in that**
the predetermined operation is a printing operation and the workpiece is a container (3) containing a printing dye, and
the controller (90) causes a dye pouring operation to be performed, the dye pouring operation including transporting the container (3) to a position above a screen-printing plate (2) while gripping the container (3) with at least one of the plurality of hands (7, 8L, 8R, 9) and turning the container (3) upside down while gripping the container (3) with the plurality of hands (7, 8L, 8R, 9) so that the dye contained in the container (3) is poured on the screen-printing plate (2).

5. The robotic system (1) according to Claim 4, **characterized by** further comprising:
a sucking unit (5) that is arranged in the work space and capable of sucking the dye,
wherein the controller (90) controls operations of the arms (11, 12) and the plurality of hands (7, 8L, 8R, 9) so as to, after the dye pouring operation has been performed, transport the container (3) to the sucking unit (5) while gripping the container (3) with at least one of the plurality of hands (7, 8L, 8R, 9) and to remove a surplus dye adhering to an outer peripheral surface of the container (3) during the dye pouring operation by sucking the surplus dye with the sucking unit (5).

6. The robotic system (1) according to Claim 5, **characterized in that**
the sucking unit (5) includes a holdable portion (5d) that is holdable with the plurality of hands (7, 8L, 8R, 9), and
the controller (90) controls operations of the arms (11, 12) and the plurality of hands (7, 8L, 8R, 9) so as to transport the sucking unit (5) to a position above the screen-printing plate (2) while gripping the holdable portion (5d) using at least one of the plurality of hands (7, 8L, 8R, 9) and remove a surplus dye on the screen-printing plate (2) by sucking the surplus dye with the sucking unit (5).

7. The robotic system (1) according to any one of Claims 1 to 6, **characterized in that**
the end effectors are hands (7, 8L, 8R, 9),
the controller (90) controls operations of the arms (11, 12) and the plurality of hands (7, 8L, 8R, 9) so as to transport the workpiece while different portions of the workpiece are gripped by the plurality of hands (7, 8L, 8R, 9), and
the center of gravity of the workpiece is positioned between the portions of the workpiece gripped by the plurality of hands (7, 8L, 8R, 9).

8. The robotic system (1) according to Claim 7, **characterized in that**
the predetermined operation is a printing operation and the workpiece is a screen-printing plate (2), and
the controller (90) causes a transporting operation to be performed such that the screen-printing plate (2) is transported while being gripped by the plurality of hands (7, 8L, 8R, 9).

9. The robotic system (1) according to Claim 8, **characterized by** further comprising:
a reference portion (2a1, 2a2) positioned at a predetermined position of the screen-printing plate (2) and functioning as a reference during the transporting operation; and
a reference-portion detecting unit (91) that detects the reference portion (2a1, 2a2) of the screen-printing plate (2) transported using the plurality of hands (7, 8L, 8R, 9),
wherein the controller (90) controls operations of the arms (11, 12) and the plurality of hands (7, 8L, 8R, 9) such that the position of the screen-printing plate (2) is adjusted on the basis of the reference portion (2a1, 2a2) detected by the reference-portion detecting unit (91) and such that the screen-printing plate (2) is transported to a desired position on a print workbench (20) on which the printing operation is performed.

10. The robotic system (1) according to any one of Claims 1 to 9, **characterized in that**
the end effectors are hands (7, 8L, 8R, 9), and
the controller (90) controls operations of the arms (11, 12) and the plurality of hands (7, 8L, 8R, 9) such that the workpiece slide over an object while the workpiece is gripped by the plurality of hands (7, 8L, 8R, 9).

11. The robotic system (1) according to Claim 10, **characterized in that**
the predetermined operation is a printing operation, the workpiece is a squeegee (4), and the object is a screen-printing plate (21), and
the controller (90) causes a squeegeeing operation to be performed such that the squeegee (4) slide over the screen-printing plate (21) while being gripped by the plurality of hands (7, 8L, 8R, 9).

12. The robotic system (1) according to any one of Claims 1 to 11, **characterized by** comprising a sliding mechanism (16) that causes the robot (10) to slide along the ceiling.
